# EUROPÄISCHE PATENTSCHRIFT

(11) **EP 3 679 682 B1**
(45) Veröffentlichungstag und Bekanntmachung des Hinweises auf die Patenterteilung: **22.09.2021**
(21) Anmeldenummer: 17764548.8
(22) Anmeldetag: 05.09.2017
(51) Int. Cl.: H04L 9/00, G06F 1/03, G06F 7/58, H04L 9/08, G02F 1/03

(54) **VORRICHTUNG UND VERFAHREN ZUM ERZEUGEN EINES SCHLÜSSELS**
DEVICE AND METHOD FOR GENERATING A KEY
DISPOSITIF ET PROCÉDÉ DE GÉNÉRATION D'UNE CLÉ

(43) Veröffentlichungstag der Anmeldung: 15.07.2020
(73) Patentinhaber: Fraunhofer-Gesellschaft zur Förderung der angewandten Forschung e.V., 80686 München (DE)
(72) Erfinder: BLASL, Martin, 01109 Dresden (DE); COSTACHE, Florenta, 01099 Dresden (DE)
(74) Vertreter: König, Andreas Rudolf
(86) Internationale Anmeldenummer: PCT/EP2017/072241
(87) Internationale Veröffentlichungsnummer: WO 2019/048024

(56) Entgegenhaltungen:
- GB-A- 2 529 228
- US-A1- 2008 149 866

## Beschreibung

Die vorliegende Erfindung bezieht sich auf eine Vorrichtung zum Erzeugen eines Schlüssels, etwa einer Bitfolge, unter Verwendung eines Multimode-Interferometers. Die vorliegende Erfindung bezieht sich ferner auf ein Verfahren zum Bereitstellen eines Schlüssels und auf ein kryptographisches Multimode-Interferometer bzw. ein elektrooptisch programmierbares Multimode-Interferometer als kryptographischen Schlüssel.

Für die Zwecke der Authentifizierung und/oder Verschlüsselung besteht ein Bedarf an Konzepten zum Ableiten von Schlüsseln. Hierfür kann beispielsweise Passwörter oder andere gemeinsame Geheimnisse (shared secret) genutzt werden, die es ermöglichen, festzustellen, ob der jeweilige Kommunikationspartner über das erforderliche Wissen verfügt.

Bekannte software- oder hardwarebasierte Algorithmen zum Ausführen einer Verschlüsselung können nur unzureichend, d. h. mit ungenügender Genauigkeit und/oder mit zu großem Rechenaufwand, abgebildet werden.

Wünschenswert wäre deshalb ein Konzept zum Erzeugen eines Schlüssels, das den Schlüssel mit einer hohen Genauigkeit und mit geringem Rechenaufwand erzeugen kann.

Eine Aufgabe der vorliegenden Erfindung besteht deshalb darin, eine Vorrichtung zum Erzeugen eines Schlüssels und ein Verfahren zum Erzeugen eines Schlüssels zu schaffen, die es ermöglichen einen Schlüssel mit hoher Präzision und geringem Rechenaufwand zu erzeugen. Dokumente GB2529228A und US2008/149866A1 stellen relevante Vorarbeiten dar.

Diese Aufgabe wird durch den Gegenstand der unabhängigen Patentansprüche gelöst.

Eine Erkenntnis der vorliegenden Erfindung besteht darin, erkannt zu haben, dass durch Verwendung eines Multimode-Interferometers Hardware-basiert, das bedeutet, mit geringem Rechenaufwand, ein Schlüssel erzeugt werden kann, der durch Ausnutzen der optischen Eigenschaften des Multimode-Interferometers mit einer hohen Präzision erhaltbar ist.

Gemäß einem Ausführungsbeispiel umfasst eine Vorrichtung zum Erzeugen eines Schlüssels ein Multimode-Interferometer, das mit einer Lichtquelle koppelbar ist und einen Lichtpfad mit einem Material umfasst, das eine steuerbare Brechzahl aufweist, wobei der Lichtpfad ausgebildet ist, um unter dem Einfluss einer lokal variierenden Brechzahl des Materials Licht an einer Eingangsseite zu erhalten, zu beeinflussen, und um ein beeinflusstes Licht an einer Ausgangsseite bereitzustellen. Die Vorrichtung umfasst ferner eine Empfangseinrichtung, die ausgebildet ist, um das beeinflusste Licht an der Ausgangsseite zu empfangen und eine Auswerteeinrichtung, die ausgebildet ist, um eine Auswertung basierend auf dem beeinflussten Licht auszuführen, und um basierend auf der Auswertung den Schlüssel zu erzeugen.

Gemäß einer Ausführungsform ist die Vorrichtung konfiguriert, um basierend auf der lokal variierenden Brechzahl eine lokal variierende Beeinflussung des Lichts zu erhalten. Dies ermöglicht den Erhalt des Schlüssels durch die lokale Variation der Brechzahl innerhalb des Materials, was mit geringem Rechenaufwand und in hoher Präzision erhalten werden kann.

Gemäß einer Ausführungsform umfasst die Vorrichtung eine Lichtquelle, die mit dem Lichtpfad verbunden ist und die ausgebildet ist, um das Licht auszusenden. Dies ermöglicht den Erhalt einer funktionsintegrierten Schaltung, bei der die Lichtquelle und das Material aufeinander angepasst sein können.

Gemäß einer Ausführungsform ist die Lichtquelle eine schmalbandige Lichtquelle, etwa ein Laser oder eine Lichtquelle, die über ein Filter verfügt, das möglicherweise breitbandiges Licht empfängt und einen schmalbandigen Anteil hieraus ausgibt.

Gemäß einer Ausführungsform umfasst die Empfangseinrichtung ein Filter, das konfiguriert ist, um das beeinflusste Licht zu filtern und um ein schmalbandiges gefiltertes Licht an einem Filterausgang bereitzustellen, wobei die Auswerteeinrichtung ausgebildet ist, um die Auswertung basierend auf dem schmalbandigen gefilterten Licht auszuführen. Dies ermöglicht die Verwendung von vergleichsweise breitbandigen Lichtquellen, was eine einfache technische Ausführung ermöglicht, und eine Filterung des verwendeten Lichts an der Empfangseinrichtung, so dass unverändert präzise Schlüssel mit einer unverändert hohen Genauigkeit erhalten werden können.

Gemäß einer Ausführungsform ist die Auswerteeinrichtung ausgebildet, um eine lokale Intensitätsverteilung des beeinflussten Lichts oder eines gefilterten Lichts zu bestimmen, und um basierend auf der lokalen Intensitätsverteilung den Schlüssel zu erzeugen. Vorteilhaft daran ist, dass eine Intensitätsverteilung mit geringem Rechenaufwand, etwas unter Verwendung von Schwellwerten, bestimmbar ist.

Gemäß einer Ausführungsform ist die Auswerteeinrichtung ausgebildet, um die lokale Intensitätsverteilung in voneinander verschiedenen Teilbereichen eines Gesamtbereichs des Lichtpfades auszuführen. Der Schlüssel umfasst eine Mehrzahl von Schlüsselabschnitten, wobei jeder Schlüsselabschnitt einem Teilbereich zugeordnet ist. Dies ermöglicht den Erhalt komplexer Schlüssel mit einer geringen Komplexität des Systems.

Gemäß einer Ausführungsform weist die Vorrichtung eine Elektrodenanordnung auf, die ausgebildet ist, um die lokal variierende Brechzahl des Materials basierend auf lokal variierenden elektrischen Feldern der Elektrodenanordnung zu erzeugen. Die Elektrodenanordnung kann Teil des Multimode-Interferometers sein. Vorteilhaft ist, dass elektrische Felder mit hoher Genauigkeit, hoher Reproduzierbarkeit und mit geringem technischem Aufwand erzeugbar sind.

Gemäß einer Ausführungsform weist die Elektrodeneinrichtung eine Mehrzahl von räumlich getrennten, d. h. gegeneinander isolierten, Elektrodenelementen auf, die ausgebildet sind, um die Brechzahl des Materials räumlich getrennt zu beeinflussen. Die Vorrichtung weist eine Ansteuereinrichtung auf, die ausgebildet ist, um die Elektrodenelemente so anzusteuern, dass jedem Muster angesteuerter Elektroden der Elektrodeneinrichtung ein Muster in dem beeinflussten Licht eindeutig zugeordnet ist. Vorteilhaft daran ist, dass ein Ansteuersignal zum Ansteuern der Elektroden in ein Muster des beeinflussten Lichts eindeutig überführbar ist.

Gemäß einer Ausführungsform weist die Elektrodeneinrichtung eine Mehrzahl von räumlich getrennten Elektrodenelementen auf, die in einem zweidimensionalen Array angeordnet sind. Die Elektroden sind bezüglich der Beeinflussung des durch den Lichtpfad geleiteten Lichts bezüglich zumindest einer Richtung des zweidimensionalen Arrays asymmetrisch gebildet. Dies kann so weit ausgeführt werden, dass jede Elektrode eine eindeutige Beeinflussung in dem beeinflussten Licht erzeugt und/oder jede Kombination von Elektrodenelementen, die angesteuert werden, ein eindeutiges Muster erzeugt. Vorteilhaft ist, dass eine hohe Entropie in dem Schlüssel erhalten werden kann und ein hoher Wertebereich des Schlüssels erhalten wird.

Gemäß einer Ausführungsform ist die Vorrichtung konfiguriert, um eine asymmetrische Beeinflussung des durch den Lichtpfad geleiteten Lichts bezüglich zumindest einer Richtung des zweidimensionalen Arrays durch voneinander verschiedene Elektrodengeometrien und/oder durch voneinander verschiedene elektrische Spannungen an den Elektrodenelementen zu erzeugen. Dies ermöglicht die Ansteuerung der Elektroden mit geringem Aufwand, etwa durch vorkonfigurierte Elektrodengeometrien und/oder rechenunaufwendiges Anlegen konstanter und voneinander verschiedener oder veränderlicher Spannungen.

Gemäß einer Ausführungsform weist die Elektrodeneinrichtung eine Mehrzahl von räumlich getrennten Elektrodenelementen auf, die in Zeilen und Spalten eines zweidimensionalen Arrays angeordnet sind. Elektroden innerhalb einer Zeile weisen eine voneinander verschiedene und innerhalb der Zeile eindeutige Abmessung entlang einer Zeilenrichtung auf. Alternativ oder zusätzlich weisen Elektroden innerhalb einer Spalte eine voneinander verschiedene und innerhalb der Spalte eindeutige Abmessung entlang einer Spaltenrichtung auf. Diese Kriterien können für eine, mehrere oder alle Zeilen und/oder Spalten gelten. Vorteilhaft daran ist, dass eine kompakte Anordnung der Elektrodengeometrien erhalten werden kann.

Gemäß einer Ausführungsform weist ein Quotient der Abmessung zweier beliebiger benachbarter Elektroden entlang der Zeilenrichtung einen einheitlichen Quotientenwert auf und/oder ein Quotient der Abmessung zweier beliebiger Elektroden entlang der Spaltenrichtung weist den einheitlichen Quotientenwert auf. Dies ermöglicht den einfachen Erhalt individueller Elektrodenelemente.

Gemäß einer Ausführungsform weist der Quotientenwert einen Wert innerhalb eines Wertebereichs von zumindest 1,5 und höchstens 10 auf, etwa ein Wert von zumindest 2, etwa 2. Beispielsweise weist eine benachbarte Elektrode entlang der Spaltenrichtung oder Zeilenrichtung eine halbe Abmessung verglichen mit der anderen Elektrode auf. Ein derartiger Quotientenwert ist besonders vorteilhaft für die Ausgestaltung der individuellen Elektrodenelemente.

Gemäß einer Ausführungsform ist das Multimode-Interferometer ausgebildet, um die Brechzahl des Materials lokal variierend basierend auf einer Bitfolge umfassend eine erste Anzahl von Bits zu variieren. Die Auswerteeinrichtung ist ausgebildet, um für den Schlüssel eine Bitfolge mit der ersten Anzahl von Bits für den Schlüssel bereitzustellen. Dies ermöglicht den Erhalt eines n-Bitschlüssels basierend auf einer n-Bitansteuerung des Multimode-Interferometers.

Gemäß einer Ausführungsform ist die Vorrichtung konfiguriert, um die Bitfolge an einem Signalausgang bereitzustellen, und um an einem Signaleingang ein Eingangssignal zu empfangen, das einen Referenzschlüssel aufweist, wobei die Vorrichtung ausgebildet ist, um den Referenzschlüssel mit dem Schlüssel zu vergleichen, und um basierend auf einem Vergleichsergebnis eine Identität eines Senders des Eingangssignals zu bewerten. Dies ermöglicht eine Überprüfung, ob die andere Vorrichtung das geteilte Geheimnis kennt. Alternativ oder zusätzlich kann die Vorrichtung ausgebildet sein, um basierend auf einer erhaltenen Bitfolge den Schlüssel abzuleiten und den Schlüssel bereitzustellen, so dass die den Schlüssel empfangende Vorrichtung die Identität der Vorrichtung überprüfen kann.

Gemäß einer Ausführungsform ist der Schlüssel ein erster Schlüssel. Die Vorrichtung ist ausgebildet, um während eines ersten Zeitintervalls ein erstes Licht durch den Lichtpfad zu leiten, um den ersten Schlüssel zu erhalten, und um während eines zweiten Zeitintervalls ein zweites Licht durch den Lichtpfad zu leiten, um einen zweiten Schlüssel zu erhalten. Die Auswerteeinrichtung ist konfiguriert, um den ersten Schlüssel und den zweiten Schlüssel zu einem Gesamtschlüssel zu kombinieren. Dies ermöglicht eine synergetische wiederholte Nutzung des Multimode-Interferometers, das in Wechselwirkung mit unterschiedlichem Licht, etwa in unterschiedlichen Wellenlängen, unterschiedliche Moden anregen bzw. sich in unterschiedlichen Moden ausbreiten kann und so unterschiedliche Muster in dem beeinflussten Licht erzeugen kann, so dass die verwendete Lichtart oder Lichtquelle ein weiterer Freiheitsgrad ist, der zu einer Erhöhung der in dem Schlüssel verwendeten oder erzeugten Bits unter Beibehaltung der hohen Entropie verwendet werden kann.

Gemäß einer Ausführungsform ist das Multimode-Interferometer ein erstes Multimode-Interferometer. Die Vorrichtung weist zumindest ein zweites Multimode-Interferometer auf, das mit einem Ausgang des Lichtpfades gekoppelt ist. Dies ermöglicht die weitere Beeinflussung des bereits beeinflussten Lichts in dem zweiten Multimode-Interferometer, was eine hohe Robustheit des erzeugten Schlüssels ermöglicht.

Gemäß einer Ausführungsform weist die Vorrichtung zumindest ein drittes Multimode-Interferometer auf, das parallel zu dem zweiten Multimode-Interferometer mit dem Ausgang des Lichtpfades gekoppelt ist und ausgebildet ist, um eine von dem ersten Multimode-Interferometer verschiedene lokale Intensitätsverteilung des Lichtpfades zu erhalten. Das bedeutet, dass der Ausgang des ersten Multimode-Interferometers auf zumindest zwei weitere Multimode-Interferometer aufgeteilt werden kann, die voneinander zumindest teilweise disjunkte Informationen erhalten und diese weiter beeinflussen. Dies ermöglicht eine weiter erhöhte Robustheit des erzeugten Schlüssels basierend auf den Ausgängen des zweiten und dritten Multimode-Interferometers.

Gemäß einer Ausführungsform ist das Multimode-Interferometer ein erstes Multimode-Interferometer, das verschachtelt mit einem zweiten Multimode-Interferometer angeordnet ist. Dies ermöglicht eine hohe Komplexität des erzeugten Schlüssels und somit eine hohe Robustheit des erzeugten Schlüssels.

Gemäß einer Ausführungsform ist der Lichtpfad ein erster Lichtpfad und weist zumindest zwei räumlich beabstandete Ausgänge des Lichtpfades auf, die konfiguriert sind, um unterschiedliche räumliche Intensitätsverteilungen des Lichtpfades auszugeben. Die räumlich beabstandeten Ausgänge sind an unterschiedlichen lateralen Stellen mit einem Eingang eines zweiten Lichtpfades des zweiten Multimode-Interferometers gekoppelt. Das bedeutet, dass der Lichtpfad des zweiten Multimode-Interferometers an lateral unterschiedlichen Stellen unterschiedlich beeinflusstes Licht erhalten kann, so dass am Ausgang des zweiten Multimode-Interferometers ein hochgradig komplex beeinflusstes Licht erhalten werden kann, was einen robusten Schlüssel ermöglicht.

Gemäß einer Ausführungsform ist das Material zumindest eines aus einem elektrooptischen Material, einem magnetooptischen Material, einem thermooptischen Material und einem spannungsoptischen Material.

Gemäß einer Ausführungsform ist das Material ein elektrooptisches Material, und umfasst zumindest eines aus einem Beta-Bariumborat, einem Lithiumniobat, einem Blei-Lanthan-Zirkonat-Titanat, und einem Flüssigkristall und einem Nitrobenzol-Material, welches eine Flüssigkeit mit einem ausgeprägten Kerr-Effekt bereitstellen kann. Diese Materialien ermöglichen eine präzise Ansteuerung mit geringen Alterungseffekten und einer hohen Präzision.

Gemäß einer Ausführungsbeispiel umfasst ein Verfahren zum Erzeugen eines Schlüssels ein Leiten von Licht von einer Eingangsseite eines Lichtpfades zu einer Ausgangsseite des Lichtpfades unter dem Einfluss einer lokal variierenden Brechzahl eines Materials, das eine steuerbare Brechzahl aufweist, des Lichtpfades. Das Verfahren umfasst ein Bereitstellen eines beeinflusstes Lichts an der Ausgangsseite und ein Empfangen des beeinflussten Lichts an der Ausgangsseite. Ferner umfasst das Verfahren ein Ausführen einer Auswertung basierend auf dem beeinflussten Licht und ein Erzeugen des Schlüssels basierend auf der Auswertung.

Weitere vorteilhafte Ausführungsformen sind der Gegenstand weiterer abhängiger Patentansprüche.

Bevorzugte Ausführungsbeispiele der vorliegenden Erfindung werden nachfolgend Bezug nehmend auf die beiliegenden Zeichnungen erläutert. Es zeigen:
- Fig. 1: ein schematisches Blockschaltbild einer Vorrichtung zum Erzeugen eines Schlüssels gemäß einem Ausführungsbeispiel;
- Fig. 2a: eine schematische Aufsicht auf eine Vorrichtung gemäß einem Ausführungs-beispiel, die eine mit einem Lichtleiter verbundene Lichtquelle aufweist;
- Fig. 2b: eine schematische Seitenschnittansicht der Vorrichtung aus Fig. 2a entlang eines Schnitts einer in Fig. 2a entsprechend dargestellten Schnittlinie;
- Fig. 2c.: eine schematische Seitenschnittansicht einer gegenüber Fig. 2b modifizierten der Vorrichtung, bei der Elektroden und Gegenelektroden an derselben Seite eines optischen Kerns angeordnet sind gemäß einem Ausführungsbeispiel;
- Fig. 3: eine schematische Darstellung einer Ausgangsseite einer Vorrichtung gemäß einem Ausführungsbeispiel, die in voneinander verschiedene Teilbereiche unterteilt ist;
- Fig. 4: ein schematisches Blockschaltbild einer Vorrichtung gemäß einem Ausführungsbeispiel, die mit einer weiteren Vorrichtung kommuniziert;
- Fig. 5a-d: schematische Aufsichten auf Elektrodenanordnungen von MultimodeInterferometern, die in Vorrichtungen gemäß Ausführungsbeispielen eingesetzt werden können;
- Fig. 6: eine schematische Aufsicht auf eine Vorrichtung gemäß einem Ausführungsbeispiel, die eine Ansteuereinrichtung und Auswerteeinheit aufweist;
- Fig. 7: eine schematische Aufsicht auf eine Vorrichtung gemäß einem Ausführungsbeispiel, die zumindest ein erstes Multimode-Interferometer und ein zweites, seriell angeordnetes Multimode-Interferometer aufweist;
- Fig. 8: eine schematische Aufsicht auf eine Vorrichtung gemäß einem Ausführungsbeispiel, bei der ein Multimode-Interferometer verschachtelt in einem weiteren Multimode-Interferometer angeordnet ist; und
- Fig. 9: ein schematisches Ablaufdiagramm eines Verfahrens gemäß einem Ausführungsbeispiel.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in den unterschiedlichen Ausführungsbeispielen dargestellte Beschreibung dieser Elemente untereinander austauschbar ist bzw. aufeinander angewendet werden kann.

Nachfolgende Ausführungsbeispiele beziehen sich auf eine Vorrichtung mit einem Multimode-Interferometer. Ein Multimode-Interferometer kann ausgebildet sein, um Licht von einer Eingangsseite zu einer Ausgangsseite eines Lichtpfades zu leiten. Innerhalb des Lichtpfades kann sich das Licht in mehrere Moden ausbreiten, die jeweils eine Beeinflussung des Lichts hervorrufen. Diese Beeinflussung kann durch eine veränderliche Amplitude, Phase oder Intensitätsverteilung an der Ausgangsseite des Lichtpfades feststellbar sein.

Nachfolgende Ausführungsbeispiele sind im Zusammenhang mit elektrooptischem Material erläutert, welches basierend auf einem elektrischen Feld eine lokal variierbare optische Brechzahl aufweisen kann. Obwohl die Ausführungsbeispiele im Zusammenhang mit elektrooptischen Material erläutert sind, sind die Ausführungsbeispiele nicht hierauf beschränkt, sondern beziehen sich auch auf andere Materialien, deren Brechzahl variierbar ist. Hierzu gehören unter anderem magnetooptische Materialien zum Ausnutzen eines magnetooptischen Effekts basierend auf einem magnetischen Feld, thermooptische Materialien zum Ausnutzen eines thermooptischen Effekts basierend auf einer veränderlichen Temperatur und/oder eines spannungsoptischen Materials zum Ausnutzen eines spannungsoptischen Effekts basierend auf einer elektrischen Spannung. Alternativ oder zusätzlich können Multi-Quantum-Well-Strukturen verwendet werden, welche z.B. durch GaAs/AlGaAs-Halbleiter erzeugt werden.

Für die Beeinflussung der unterschiedlichen Moden in dem bspw. elektrooptischen Material kann eine lokal variierende Änderung der Brechzahl des elektrooptischen Materials ausgenutzt werden. Ausführungsbeispiele sehen hierfür vor, an unterschiedlichen Orten in dem elektrooptischen Material elektrische Felder anzulegen, um die Brechzahl des elektrooptischen Materials am Ort des elektrischen Felds zu beeinflussen, d. h. zu verändern. Durch die veränderte Brechzahl kann eine räumliche Störstelle in dem elektrooptischen Material erhalten werden, die eine charakteristische Beeinflussung der entsprechenden Mode ermöglicht. Die Mode kann hierbei durch eine Wellenlänge von durch den Lichtpfad wandernden Lichts, von einem Ort und/oder einer räumlichen Ausdehnung der Störstelle beeinflusst sein. Das bedeutet, dass die Beeinflussung der Moden eine Abhängigkeit von der Wellenlänge des Lichtes aufweisen kann.

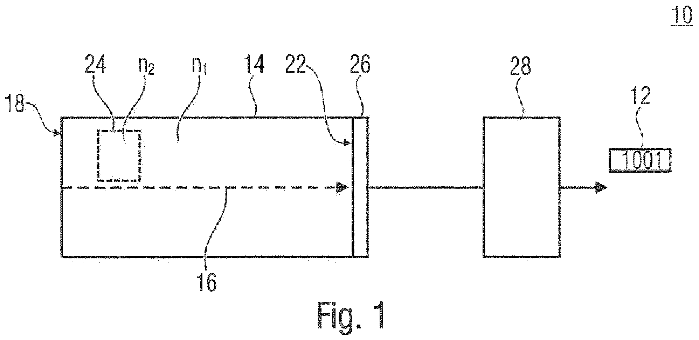

Fig. 1 zeigt ein schematisches Blockschaltbild einer Vorrichtung 10 zum Erzeugen eines Schlüssels 12 gemäß einem Ausführungsbeispiel. Die Vorrichtung 10 umfasst ein Multimode-Interferometer 14, das mit einer Lichtquelle koppelbar ist. Beispielsweise weist das Multimode-Interferometer 14 einen Lichtpfad 16 auf, durch welchen Licht wandern kann oder geleitet wird und hierbei beeinflusst werden kann. An einer Eingangsseite 18 kann eine Lichtquelle oder ein mit der Lichtquelle verbundener Lichtleiter gekoppelt oder angeschlossen werden, um Licht zu erhalten. Der Lichtpfad 16 kann in seinem Verlauf von der Eingangsseite hin zu einer Ausgangsseite 22 an unterschiedlichen Orten unterschiedliche Brechzahlen n₁ bzw. n₂ aufweisen, wobei eine Anzahl, eine Position und/oder eine Geometrie von Bereichen 24, die gegenüber anderen Bereichen eine andere Brechzahl n₂ aufweisen, beliebig sein kann. Insbesondere können auch mehr als zwei voneinander verschiedene Brechzahlen n₁ oder n₂ in dem Multimode-Interferometer 14 ausgebildet werden. Das bedeutet, es können auch mehr als zwei unterschiedliche Bereiche mit unterschiedlichen Brechzahlen vorliegen.

In dem Lichtpfad 16 kann elektrooptische Material angeordnet sein, das ausgebildet sein kann, um ansprechend auf ein angelegtes elektrisches Feld seine Brechzahl zu ändern. Beispiele für ein derartiges elektrooptisches Material sind Beta-Bariumborat, Lithiumniobat, Blei-Lanthan-Zirkonat-Titanat, nematisches Flüssigkeitskristalle und/oder paranematische Flüssigkeitskristalle. Alternativ können auch andere Materialien, deren Brechzahl variierbar ist, verwendet werden, etwa Materialien zum Ausnutzen eines magnetooptischen Effekts (magnetooptisches Material), eines thermooptischen und/oder eines spannungsoptischen Effekt (thermooptisches Material bzw. spannungsoptischen Material). Alternativ oder zusätzlich können Multi-Quantum-Well-Strukturen verwendet werden, welche z.B. durch GaAs/AlGaAs-Halbleiter erzeugt werden. Das bedeutet, es können auch andere Mechanismen zur Brechzahlvariation im MMI verwendet werden. Obwohl sich nachfolgende Ausführungsbeispiele auf eine Anordnung von Elektroden beziehen, die ausgebildet sind, um ein elektrisches Feld an das elektrooptische Material anzulegen, kann gemäß anderen Ausführungsbeispielen ein anderes Material verwendet werden, wobei in diesen Ausführungsbeispielen andere physikalische Größen an das Material angelegt werden, um die Brechzahl zu beeinflussen, bspw, ein Magnetfeld, eine elektrische Spannung oder eine Temperatur, was durch Elektroden oder andere Erzeuger der physikalischen Größe erfolgen kann, die in diesem Fall anzuordnen sind.

Elektrooptische Materialien können basierend auf räumlich variierenden elektrischen Feldern unterschiedliche Brechzahlen n₁ und/oder n₂ aufweisen, was ein lokal variierende Beeinflussung von durch den Lichtpfad 16 geleiteten Lichts ermöglicht, womit eine Ausbreitung des Lichts in unterschiedlichen oder veränderlichen Moden ermöglicht wird. In ähnlicher Weise können magnetooptische Materialen können basierend auf räumlich variierenden elektrischen Feldern, spannungsoptische Materialien können basierend auf räumlich variierenden Spannungen oder thermooptische Materialien können basierend auf räumlich variierenden Temperaturen die unterschiedlichen Brechzahlen n₁ und/oder n₂ aufweisen. Die ausgeprägten Moden können eine verglichen mit der Eingangsseite 18 verschiedene Phasenverteilung, Amplitudenverteilung oder Intensitätsverteilung an der Ausgangsseite 22 in dem beeinflussten Licht aufweisen oder bereitstellen.

Die Vorrichtung 10 umfasst eine Empfangseinrichtung 26, die ausgebildet ist, um das beeinflusste Licht an der Ausgangsseite 22 zu empfangen. Beispielsweise kann die Empfangseinrichtung 26 Photodetektoren oder dergleichen aufweisen. Alternativ können auch andere lichtempfindliche Elemente oder Materialien eingesetzt werden, etwa Widerstandselemente, die auf eintreffendes Licht mit unterschiedlichen Widerstandswerten reagieren.

Die Vorrichtung 10 umfasst ferner eine Auswerteeinrichtung 28, die ausgebildet ist, um eine Auswertung basierend auf dem beeinflussten Licht auszuführen, und um basierend auf der Auswertung den Schlüssel 12 zu erzeugen. Beispielsweise kann die Auswerteeinrichtung 28 ausgebildet sein, um basierend auf den Informationen, die von der Empfangseinrichtung 26 erhalten werden, ein Muster des Lichts an der Ausgangsseite 22 zu bewerten, etwas hinsichtlich einer Phasenverteilung, Amplitudenverteilung und/oder Intensitätsverteilung. Dieses Muster kann basierend auf einem vordefinierten Kriterium in den Schlüssel 12 überführbar sein. Gemäß einer Ausführungsform kann die Empfangseinrichtung 26 ein eindimensionales oder zweidimensionales Array von Photodetektoren aufweisen. Die Auswerteeinrichtung 28 kann für jeden der Photodetektoren eine Schwellwertentscheidung ausführen, ob die in dem jeweiligen Photodetektor erfasste Größe, etwa eine Intensität, in eine binäre 0 oder eine binäre 1 zu überführen ist, Durch Aneinanderreihung der Einzelentscheidungen kann eine Bitfolge als Schlüssel 12 erhalten werden.

Alternativ sind auch andere Formen der Ableitung einer Bitfolge möglich, um den Schlüssel 12 zu erhalten. Zusätzlich zu der Ableitung eines Bits aus einer Schwellwertentscheidung ist es ebenfalls möglich, eine derart erhaltene Bitfolge weiterzuverarbeiten, etwa durch Invertierung, Kombination mit anderen Bits oder Größen oder dergleichen.

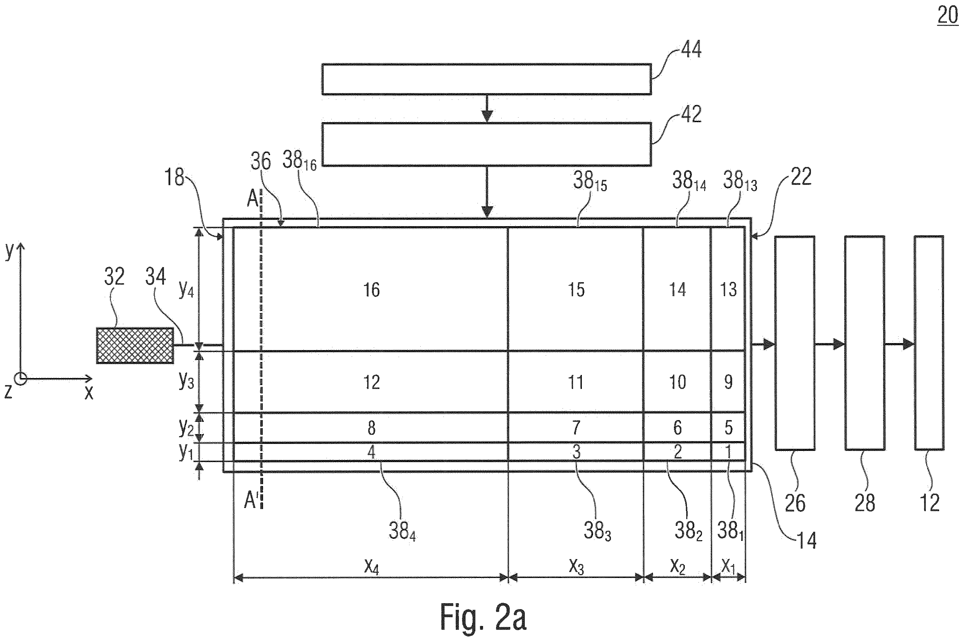

Fig. 2a zeigt eine schematische Aufsicht auf eine Vorrichtung 20 gemäß einem Ausführungsbeispiel, die ähnlich aufgebaut sein kann wie die Vorrichtung 10. Die Vorrichtung 20 umfasst das Multimode-Interferometer 14. Verglichen mit der Vorrichtung 10 umfasst die Vorrichtung 20 eine Lichtquelle 32, die mit einem Lichtleiter 34 verbunden ist, der konfiguriert ist, um von der Lichtquelle 32 bereitgestelltes Licht an die Eingangsseite 18 zu liefern. Alternativ kann die Lichtquelle 32 auch direkt mit der Eingangsseite 18 verbunden sein, so dass die Anordnung des Lichtleiters 34 optional ist. Bei dem Lichtleiter 34 kann es sich beispielsweise um einen Lichtwellenleiter oder dergleichen handeln. Die Lichtquelle 32 kann eine beliebige Lichtquelle sein. Es kann jedoch vorteilhaft sein, dass die Detektion und/oder die Auswertung durch die Empfangseinrichtung 26 bzw. die Auswerteeinrichtung 28 basierend auf einem schmalbandigen Licht ausgeführt wird. Als schmalbandig kann beispielsweise ein Wellenlängenbereich Δλ verstanden werden, der höchstens 10 nm, bevorzugt höchstens 1 nm und besonders bevorzugt in einem Wertebereich von 1 bis 10 pm liegt. Dies kann unter der Berücksichtigung erfolgen, dass Interferenzen in dem Multimode-Interferometer bzw. dem Lichtpfad wellenlängenabhängig erzeugt werden, so dass es für eine Interferenz zwischen einzelnen Moden vorteilhaft sein kann, schmalbandiges Licht zu verwenden. Ein Auslegekriterium kann des halb sein, dass eine Kohärenzlänge des Lichtpfades so gestaltet ist, dass Interferenzen an der Ausgangsseite 22 mit einem guten Kontrast erhalten werden, so dass eine möglichst fehlerfreie Auswertung ermöglicht ist.

Zum Erhalten des schmalbandigen Lichts kann eine schmalbandige Lichtquelle, etwa eine schmalbandige lichtemittierende Diode (LED) oder ein Laser verwendet werden. Alternativ oder zusätzlich kann die Lichtquelle 32 auch ein Filter aufweisen, das konfiguriert ist, um breitbandiges oder zumindest eine höhere Wellenlängenschwankung aufweisendes Licht eines Lichterzeugungselementes zu filtern und um am Ausgang des Filters das schmalbandige bereitzustellen, das an das Multimode-Interferometer geleitet werden kann. Alternativ oder zusätzlich ist es ebenfalls möglich, dass die Empfangseinrichtung 26 ein derartiges Filter aufweist, das konfiguriert ist, um das beeinflusste Licht zu filtern, und um aus einem möglicherweise breitbandigen Signal an der Ausgangsseite 22 lediglich ein schmalbandiges Signal herauszufiltern, um ein schmalbandiges gefiltertes Licht an einem Filterausgang bereitzustellen. Die Auswerteeinrichtung 28 kann ausgebildet sein, um die Auswertung basierend auf dem schmalbandigen Licht auszuführen.

Die Vorrichtung 20 kann eine Elektrodenanordnung 36 aufweisen, die ausgebildet ist, um die lokal variierende Brechzahl basierend auf lokal variierenden elektrischen Feldern der Elektrodenanordnung 36 zu erzeugen. Hierfür kann die Elektrodenanordnung 36 eine Mehrzahl oder Vielzahl von Elektroden 38₁ bis 38₁₆ aufweisen. Die Elektroden 38₁ bis 38₁₆ können individuell von einer Ansteuereinrichtung 42 der Vorrichtung 20 angesteuert werden. Die Ansteuereinrichtung 42 kann ausgebildet sein, um eine einzelne Elektrode 38₁ bis 38₁₆ zu einem Zeitpunkt oder eine beliebige Kombination von zumindest zwei, zumindest drei oder einer höheren Anzahl oder gar aller Elektroden 38₁ bis 38₁₆ anzusteuern. Hierfür kann die Ansteuereinrichtung 42 eine gleiche aber auch eine voneinander verschiedene elektrische Spannung an die Elektroden 38₁ bis 38₁₆ anlegen, so dass unter Berücksichtigung oder Vernachlässigung eines Elektrodenabstands der Elektroden 38₁ bis 38₁₆ zu einer jeweiligen oder gemeinsamen Referenzelektrode ein gleiches aber auch voneinander verschiedenes elektrisches Feld in dem elektrooptischen Material des Lichtpfades des Multimode-Interferometers erzeugbar ist.

Obwohl die Vorrichtung 20 so dargestellt ist, dass die Elektrodenanordnung 36 16 Elektroden aufweist, kann eine beliebige andere Anzahl von Elektroden, etwa zumindest eine, zumindest zwei, zumindest fünf, zumindest zehn, zumindest 16, zumindest 64, zumindest 256 oder eine höhere Anzahl von Elektroden verwendet werden.

Die Elektroden 38₁ bis 38₁₆ können räumlich getrennt voneinander angeordnet sein, das bedeutet, elektrisch isoliert voneinander sein. Eine individuelle Ansteuerung der Elektroden 38₁ bis 38₁₆ ermöglicht eine räumlich getrennte Beeinflussung der Brechzahl des elektrooptischen Materials des Multimode-Interferometers, etwa am jeweiligen Ort der Elektroden 38₁ bis 38₁₆. Die Beeinflussung kann sich hierbei auf die Anwesenheit eines elektrischen Feldes, auf dessen Stärke und/oder Ausprägung gegenüber einer Situation beziehen, in welcher das elektrische Feld abwesend ist, das bedeutet, die jeweilige Elektrode 38₁ bis 38₁₆ nicht angesteuert ist. Alternativ kann eine Beeinflussung auch dadurch erhalten werden, dass eine andere Feldstärke erhalten wird, etwa durch Veränderung eines Spannungswerts an der Elektrode 38₁ bis 38₁₆ von einem ersten Wert ungleich 0 zu einem zweiten Wert ungleich 0. Alternativ oder zusätzlich kann eine Beeinflussung auch durch eine Abwesenheit des elektrischen Felds erhalten werden, das bedeutet, der Referenzzustand kann eine Anwesenheit des elektrischen Felds bezeichnen.

Die Ansteuereinrichtung 42 kann ausgebildet sein, um die Elektroden 38₁ bis 38₁₆ der Elektrodeneinrichtung 36 so anzusteuern, dass jedem Muster aus angesteuerten Elektroden ein jeweiliges Muster in dem beeinflussten Licht und/oder dem Schlüssel 12 eindeutig zugeordnet ist. So kann beispielsweise ein Eingangssignal 44 der Ansteuereinrichtung 42 eine Information oder Bitfolge aufweisen, die eindeutig anzeigt, welche der Elektroden 38₁ bis 38₁₆ anzusteuern sind und/oder in welchem Umfang diese anzusteuern sind. Ist die Ansteuereinrichtung 42 beispielsweise ausgebildet, um eine Anzahl von 16 Elektroden 38₁ bis 38₁₆ binär anzusteuern, das bedeutet, zwischen einem ersten Spannungswert und einem Spannungswert zu wechseln, beispielsweise An/Aus, so kann das Eingangssignal 44 eine entsprechende Anzahl von Bits aufweisen, beispielsweise 16. Jedes der Bits des Eingangssignals 44 kann somit eindeutig einer Elektrode 38₁ bis 38₁₆ und/oder einer Kombination von zumindest zwei der Elektroden 38₁ bis 38₁₆ zugeordnet sein und anzeigen, ob und wie diese Elektroden angesteuert werden. Basierend auf dem Erhalt eines eindeutigen Musters an der Ausgangsseite 22 basierend auf jedem der Muster der Ansteuerung der Elektroden 38₁ bis 38₁₆ kann somit auch ein eindeutiger Schlüssel 12 erhalten werden, der beispielsweise eine gleiche Bitlänge aufweist wie das Eingangssignal 44. Jedem der Muster an der Ausgangsseite 22 kann somit ein Schlüssel 12 zugeordnet sein. Es kann bspw. jedem Eingangssignal 44 ein Schlüssel 12 zugeordnet werden und/oder jedem Schlüssel ein Eingangssignal. Durch Einfügung von Redundanzen, Codes oder dergleichen kann auch eine geringere Anzahl von Bits erhalten werden.

Vorteilhaft für eine eindeutige Zuordnung jedes Schlüssels 12 zu einem Eingangssignal 44 bzw. einem Muster angesteuerter Elektroden 38₁ bis 38₁₆ kann eine Asymmetrie in der Elektrodenanordnung 36 sein. Wird beispielsweise innerhalb eines Gedankenexperiments ausschließlich die Elektrode 38₁₆ betrachtet, so kann eine durch ihre Ansteuerung erhaltene Beeinflussung des Lichts identisch oder zumindest nahezu identisch sein, unabhängig davon, wo sich die Elektrode 16 entlang einer x-Richtung benachbart zu dem Lichtpfad des Multimode-Interferometers 14 befindet. Dahingegen kann eine Position entlang der y-Richtung von Relevanz sein und eine veränderte Position y der Elektrode 38₁₆ entlang der y-Richtung zu einer veränderten Beeinflussung führen. Die Beeinflussung kann jedoch symmetrisch bezüglich eines Orts, an den das Licht der Lichtquelle in das Multimode-Interferometer 14 geleitet wird, sein, etwa einer Mittenachse. Eine Anordnung bei maximalem y-Wert und einer Anordnung bei minimalem y-Wert der Elektrode 38₁₆ kann basierend auf einer derartigen Symmetrie zu einer identischen oder nahezu identischen Beeinflussung an der Ausgangsseite 22 führen. Eine Asymmetrie der Elektrodenanordnung 36 entlang der Richtungen x und/oder y kann deshalb Vorteile bei der Eindeutigkeit der an der Ausgangsseite 22 erhaltenen Muster bieten.

Die Elektroden 38₁ bis 38₁₆ können in einem zweidimensionalen Array angeordnet sein und bezüglich zumindest einer Richtung innerhalb des zweidimensionalen Arrays asymmetrisch gebildet sein.

Die Elektrodenanordnung 36 gemäß Fig. 2a zeigt eine besonders bevorzugte Ausführungsform, bei der die Elektroden 38₁ bis 38₁₆ entlang beider Richtungen x und y des zweidimensionalen Arrays asymmetrisch gebildet sind. Die Elektroden 38₁ bis 38₁₆ können in Zeilen und Spalten angeordnet sein, wobei eine Zeile beispielsweise die Elektroden 38₄, 38₃, 38₂ und 38₁; 38₈, 38₇, 38₆ und 38₅; 38₁₂, 38₁₁, 38₁₀ und 38₉ bzw. 38₁₆, 38₁₅, 38₁₄ und 38₁₃ aufweisen. Eine Spalte kann beispielsweise die Elektroden 38₄, 38₈, 38₁₂ und 38₁₆; 38₃, 38₇, 38₁₁ und 38₁₅; 38₂, 38₆, 38₁₀ und 38₁₄ bzw. 38₁, 38₅, 38₉ und 38₁₃ aufweisen.

Elektroden innerhalb einer Spalte können entlang einer Spaltenrichtung, beispielsweise y, angeordnet sein. Elektroden innerhalb einer Zeile können entlang einer Zeilenrichtung, beispielsweise x, angeordnet sein. Es versteht sich, dass durch beliebige andere Bezeichnung der Richtungen im Raum und/oder durch eine Drehung der Vorrichtung 20 im Raum eine beliebige andere Zuordnung zu den Richtungen erhalten werden kann.

Elektroden innerhalb einer Zeile können eine voneinander verschiedene Abmessung entlang der Zeilenrichtung x aufweisen. Hierbei kann die Abmessung der jeweiligen Elektrode entlang der Zeilenrichtung x eindeutig sein. Eindeutig kann sich hierbei darauf beziehen, dass jede Elektrode individuell bezüglich ihrer Abmessung ausgestaltet ist und beispielsweise eine Abmessung x₁, x₂, x₃ oder x₄ aufweist, die jeweils voneinander verschieden sind. Die Eindeutigkeit kann sich jedoch auch darauf beziehen, dass die jeweilige Abmessung x₁ bis x₄ auch nicht durch eine Kombination anderer Elektroden innerhalb der jeweiligen Zeile erhalten werden kann. Die Beeinflussung des Lichts in dem Lichtpfad kann von einer räumlichen Ausdehnung der durch das elektrische Feld erzeugten Störstelle, d. h. der veränderlichen Brechzahl, abhängig sein. Durch eine derartige Eindeutigkeit, dass eine Abmessung x₁ bis x₄ nicht durch eine Kombination jeweils anderer Werte x₁, x₂, x₃ und/oder x₄ erhalten werden kann, kann vermieden werden, dass eine ähnliche Störstelle in der gleichen Zeile erhalten wird.

Alternativ oder zusätzlich kann eine Abmessung von Elektroden innerhalb einer Spalte eine voneinander verschiedene und innerhalb der Spalte eindeutige Abmessung entlang der Spaltenrichtung y aufweisen.

Gemäß einem nicht einschränkenden Ausführungsbeispiel kann gelten, dass
x₁<x₂<x₃<x₄; und
y₁<y₂<y₃y₄.

Wird eine Abmessung entlang der jeweiligen Zeilenrichtung x oder Spaltenrichtung y zweier benachbarter Elektroden verglichen, beispielsweise ein Quotient hieraus gebildet, wobei die größere Abmessung im Zähler und die kleinere Abmessung im Nenner steht, beispielsweise y₄/y₃ für das Elektrodenpaar 38₁₆;38₁₂ oder x₃/x₂ für das Elektrodenpaar 38₁₅;38₁₄, so kann sich jeweils ein Quotient bilden, der einen Quotientenwert aufweist.

Gemäß einer Ausführungsform kann beispielsweise gelten, dass x₄=2*x₃, x₃=2*x₂ und x₂=2*x₁ sowie y₄=2*y₃, y₃=2*y₂ und y₂=2*y₁. Hier kann beispielsweise ein Quotientenwert von 2 erhalten werden, der innerhalb jeder Zeile und jeder Spalte konstant ist. Das bedeutet, dass der Quotient der Abmessung zweier beliebiger benachbarter Elektroden entlang der Zeilenrichtung und/oder Spaltenrichtung einen einheitlichen Quotientenwert aufweisen kann. Der Quotientenwert kann beispielsweise einen Wert innerhalb eines Wertebereichs von zumindest 1,5 und höchstens 10, zumindest 2 und höchstens 8 und/oder zumindest 2 und höchstens 3 aufweisen, etwa 2. Für Quotienten mit einem Wert zwischen 1 und 2 können Werte existieren, für welche die Summe zweier Elektrodenlängen der Länge einer dritten Elektrode entspricht, was im Sinne der Eindeutigkeit vermieden werden kann. Für Werte größer oder gleich 2, ist die Länge einer dritten Elektrode nicht mehr durch die Summe der Längen anderer Elektroden erreichbar, so dass Werte von zumindest 2 für den Quotienten vorteilhaft sind.

Obwohl die Elektrodenanordnung 36 so beschrieben ist, dass die Elektroden bzw. das Array asymmetrisch bezüglich beider Richtungen x und y gebildet sind, kann eine Asymmetrie bezüglich einer Richtung bereits ausreichend sein. Obwohl das Array der Elektrodenanordnung 36 so beschrieben ist, dass der Quotient innerhalb einer Zeile und einer Spalte konstant ist, kann gemäß anderen Ausführungsbeispielen ein Array derart gebildet sein, dass Elektroden innerhalb einer Zeile eine voneinander verschiedene und innerhalb der Zeile eindeutige Abmessung entlang der Zeilenrichtung x aufweisen. Alternativ oder zusätzlich können die Elektroden innerhalb einer Spalte eine voneinander verschiedene und innerhalb der Spalte eindeutige Abmessung entlang der Spaltenrichtung y aufweisen. Alternativ hierzu ist eine symmetrische Anordnung oder Ausbildung der möglicherweise identisch gebildeten Elektroden bzw. der die Brechzahl beeinflussenden Größe erfolgen.

In einer allgemeinen Form kann die Elektrodeneinrichtung 38 bezüglich des zweidimensionalen Arrays so gebildet sein, dass die Elektroden 38₁ bis 38₁₆ bezüglich der Beeinflussung des durch den Lichtpfad geleiteten Lichts bezüglich zumindest einer Richtung x oder y des zweidimensionalen Arrays asymmetrisch gebildet sind. Dies kann so ausgeführt sein, dass jede Elektrode 38₁ bis 38₁₆ eine eindeutige Beeinflussung des Lichts an der Ausgangsseite 22 hervorruft. Die asymmetrische Beeinflussung des durch den Lichtpfad geleiteten Lichts bezüglich zumindest einer Richtung x oder y des zweidimensionalen Arrays kann durch voneinander verschiedene Elektrodengeometrien und/oder durch voneinander verschiedene elektrische Spannungen an den Elektroden 38₁ bis 38₁₆ erzeugt werden.

Eine Referenzelektrode für die Elektroden 38₁ bis 38₁₆ ist in Fig. 2a nicht dargestellt.

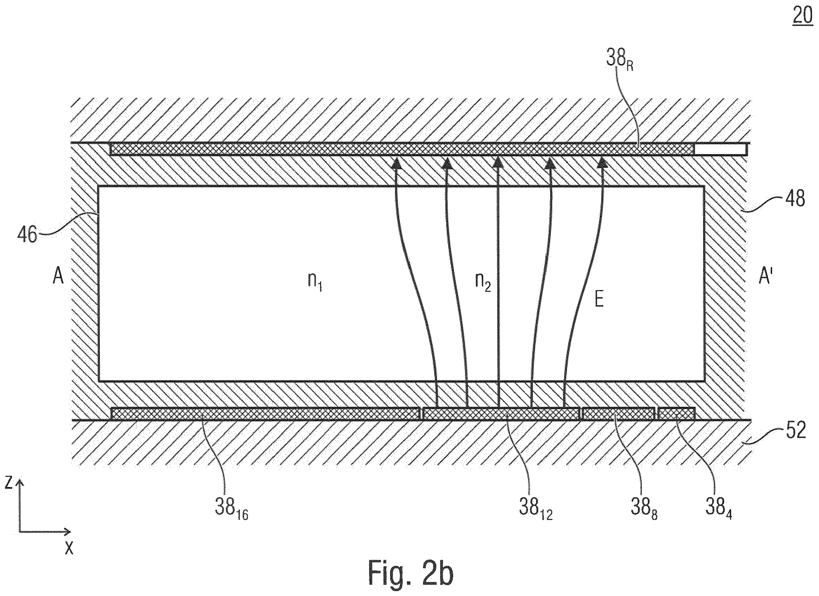

Fig. 2b zeigt eine schematische Seitenschnittansicht der Vorrichtung 20 entlang eines Schnitts A-A' einer in Fig. 2a entsprechend dargestellten Schnittlinie. Den Elektroden 38₄, 38₈, 38₁₂ und 38₁₆ innerhalb der Schnittlinie A-A' kann eine Referenzelektrode 38_{R} gegenüberliegend angeordnet sein, so dass das elektrooptische Material 46 des Multimode-Interferometers zwischen den Elektroden 38₄, 38₈, 38₁₂ und 38₁₆ oder mehrerer oder gar aller Elektroden der Elektrodenanordnung 36 und der Referenzelektrode 38_{R} angeordnet ist. Die Referenzelektrode 38_{R} kann eine einzelne Elektrode sein, die sich gegenüberliegend der kompletten Elektrodenanordnung 36 befindet, kann aber auch in Form mehrerer Elektroden gebildet sein. In der Darstellung gemäß Fig. 2b kann beispielsweise eine elektrische Spannung an die Elektrode 38₁₂ angelegt sein, etwa durch eine Ansteuerung mittels der Ansteuereinrichtung 42. Im Bereich eines derart erhaltenen elektrischen Felds E kann eine Brechzahl des elektrooptischen Materials 46 verändert sein und beispielsweise n₂ betragen, während außerhalb des elektrischen Felds eine Brechzahl von n₁ vorherrschen kann. Das elektrooptische Material 46 kann von einem Mantel 48 umschlossen sein, das sowohl einen Austritt von Licht aus dem elektrooptischen Material 46 reduzieren oder verhindern kann als eine elektrische Isolierung der Elektroden des Elektrodenarrays 36 gegenüber der Referenzelektrode 38_{R} ermöglichen kann. Die Vorrichtung 20 kann ein Substrat 52 aufweisen, das die Vorrichtung 20 zumindest teilweise trägt.

Die Ausgangsseite 22 kann eine ähnliche Geometrie aufweisen wie die gezeigte Querschnittsfläche des elektrooptischen Materials 46, wobei durch Änderungen der Geometrie des elektrooptischen Materials 46 entlang des Lichtpfades auch eine andere Querschnittsfläche erhalten werden kann. Entlang einer derartigen Fläche kann die Auswerteeinrichtung 28 ausgebildet sein, um eine lokale Intensitätsverteilung des beeinflussten Lichts oder des gefilterten Lichts zu bestimmen, und um basierend auf der lokalen Intensitätsverteilung den Schlüssel 12 zu erzeugen.

In anderen Worten überführt ein vorgeschlagenes kryptographisches Multimode-Interferometer (Krypto-MMI) ein elektrisches n-Biteingangssignal in ein elektrisches m-Bitausgangssignal, wobei gelten kann, dass n ≥ m und mithin n = m, beispielsweise n, m = 16. Beispielsweise wird zunächst jedes Bit des n-Biteingangssignals mittels der Ansteuerelektronik in einem dem jeweiligen Bitwert entsprechenden Spannungswert gewandelt, mit welchem eine dem jeweiligen Bit zugeordnete Elektrode angesteuert wird.

Wie es anhand der Fig. 2b, die einen Schnitt durch das MMI zeigt, ersichtlich ist, ändert sich aufgrund des elektrischen Felds E zwischen den Elektroden und einer Gegenelektrode die Brechzahl des elektrooptischen Kernmaterials, so dass sich im MMI eine Brechzahlverteilung ergibt, die sich aus der Gesamtheit der angesteuerten Elektrodenverteilung ergibt. Die Brechzahlverteilung innerhalb des MMIs beeinflusst, ähnlich wie bei einem Hologramm, bei dessen Durchlaufen die Phase des von einem Laser (Lichtquelle) in das MMI eingestrahlten Lichts, so dass sich für jedes digitale Eingangssignal eine charakteristische Intensitätsverteilung am Ausgang des MMIs einstellt. Diese Intensitätsverteilung am Ausgang des MMIs wird durch eine Vorrichtung zur Detektion (Empfangseinrichtung) erfasst und mittels einer Auswerteelektronik (Auswerteeinrichtung) in ein n-Bit Ausgangssignal überführt. Ein derartiges MMI zeigt eine für die Verschlüsselung günstige Charakteristik. So ist bei geeigneter Wahl der Elektrodenform und -anordnung die Überführung des Eingangssignals in das Ausgangssignal eindeutig. Dies kann durch eine asymmetrische Anordnung der Elektroden erhalten werden. Die Transferfunktion ist damit mittels statistischer Methoden nicht extrapolierbar. Des Weiteren sind Rechenmodelle des Krypto-MMI zu ungenau und/oder zu rechenaufwendig, um dessen Verhalten abzubilden.

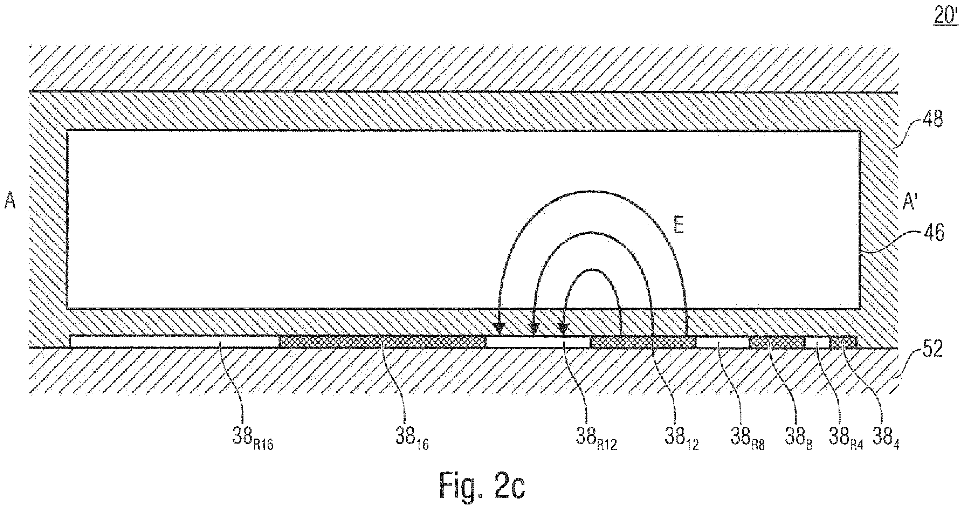

Fig. 2c zeigt eine schematische Seitenschnittansicht einer gegenüber der Vorrichtung 20 modifizierten Vorrichtung 20' entlang der Schnittlinie A-A'. Die Vorrichtung 20' ist dahingehend modifiziert, dass die Elektroden 38ᵢ und zumindest eine Gegenelektrode auf derselben Seite des Materials 46 angeordnet sind. Bspw. ist wie bei Vorrichtung 20 eine gemeinsame Gegenelektrode 38_{R} vorgesehen. Alternativ sind mehrere gemeinsam oder individuell steuerbare Gegenelektroden 38_{Ri} vorgesehen. Gemäß einem Ausführungsbeispiel ist jeweils eine Gegenelektrode 38_{Ri} einer Elektrode 38ᵢ zugeordnet, so dass Ansteuerelektroden 38 und Gegenelektroden 38_{R} in korrespondierender Anzahl vorliegen. So kann z.B. jeweils ein Bit des Schlüssels als Paar aus Elektrode 38ᵢ und Gegenelektrode 38_{Ri} dargestellt und durch Ansteuerung des Paares gebildet werden.

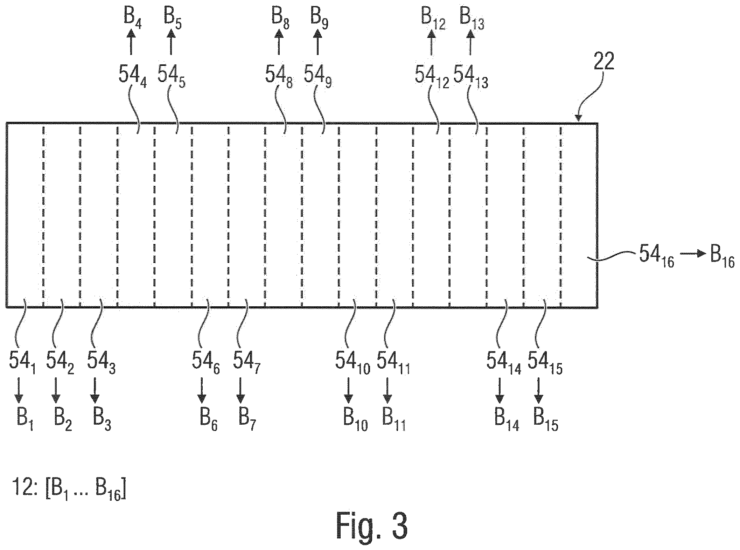

Fig. 3 zeigt eine schematische Darstellung der Ausgangsseite 22, die in voneinander verschiedene Teilbereiche 54₁ bis 54₁₆ unterteilt ist. Die Ausgangsseite 22 kann eine Querschnittsfläche des Lichtpfades sein, die bezüglich der lokal variierenden Beeinflussung ausgewertet wird. Die Auswerteeinrichtung der Vorrichtung, etwa die Auswerteeinrichtung 28, kann ausgebildet sein, um eine lokale Beeinflussung, etwa die lokale Intensitätsverteilung, in voneinander verschiedenen Teilbereichen 54₁ bis 54₁₆ eines Gesamtbereichs des Lichtpfades auszuführen, das bedeutet, der Ausgangsfläche 22. Der erzeugte Schlüssel kann eine Mehrzahl von Schlüsslabschnitten aufweisen. Jeder Schlüsselabschnitt kann zumindest ein Bit umfassen aber auch eine höhere Anzahl von Bits. Beispielsweise umfasst der Schlüssel 12 eine Anzahl von 16 Bits B₁ bis B₁₆. Jeder Schlüsselabschnitt B₁ bis B₁₆ kann einem Teilbereich 54₁ bis 54₁₆ zugeordnet sein, das bedeutet, basierend auf der lokalen Auswertung jedes Teilbereichs 54₁ bis 54₁₆ können zumindest ein Bit an Informationen für den Schlüssel 12 abgeleitet werden. Wird für jeden Teilbereich 54₁ bis 54₁₆ beispielsweise eine binäre Schwellwertentscheidung vorgenommen, so kann für jeden Teilbereich 54₁ bis 54₁₆ ein Bit an Information gewonnen werden. Erfolgt eine mehrstufige Schwellwertentscheidung, so kann auch eine höhere Anzahl von Bits je Teilbereich angeordnet werden.

Obwohl die Ausgangsseite 22 als Rechteck dargestellt ist, kann sie eine beliebige andere Form aufweisen, etwa rund, elliptisch, polygon, als Freiformfläche oder als eine Kombination hiervon. Jeder der Teilbereiche 54₁ bis 54₁₆ kann rund, eckig, polygon, elliptisch oder als Freiformfläche gebildet sein und kann eine gleiche oder von anderen Teilbereichen verschiedene Abmessung aufweisen. Insbesondere können eine Position und Art und Form der Teilbereiche 54₁ bis 54₁₆ an die erhaltenen Lichtmuster angepasst werden.

Obwohl die Teilbereiche 54₁ bis 54₁₆ so dargestellt sind, dass sie ein einzeiliges Array an der Ausgangsseite 22 bilden, kann eine beliebige Anordnung gewählt werden, etwa ein zwei- oder mehrzeiliges Array oder eine beliebige andere geometrische Anordnung, die in Übereinstimmung mit den zu erfassenden Effekten an der Ausgangsseite 22 steht.

Wie es im Zusammenhang mit den Fig. 2a und 2b erläutert ist, kann das Multimode-Interferometer ausgebildet sein, um die Brechzahl des elektrooptischen Materials lokal variierend basierend auf einer Bitfolge in dem Eingangssignal 44 zu variieren. Das Eingangssignal 44 kann eine erste Anzahl von Bits aufweisen, beispielsweise 16. Die Auswerteeinrichtung kann ausgebildet sein, um für den Schlüssel 12 eine Bitfolge mit einer korrespondierenden Anzahl von Bits für den Schlüssel 12 bereitzustellen.

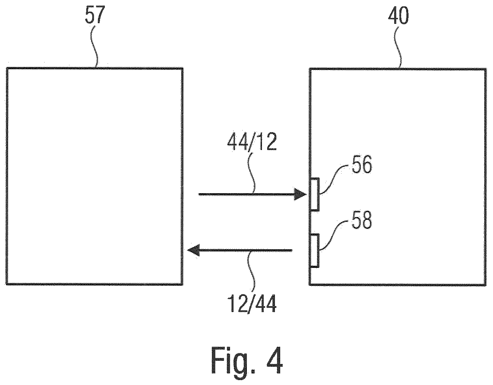

Fig. 4 zeigt ein schematisches Blockschaltbild einer Vorrichtung 40 gemäß einem Ausführungsbeispiel, die mit einer weiteren Vorrichtung 57 kommuniziert. Die Vorrichtung 40 kann ähnlich aufgebaut sein wie die Vorrichtung 20 und kann einen physikalischen oder logischen Signaleingang 56 aufweisen. An dem Signaleingang 56 kann die Vorrichtung 40 drahtlos oder drahtgebunden eine Bitfolge empfangen, die beispielsweise das Eingangssignal 44 umfasst. Die Vorrichtung 40 kann einen logischen oder physikalischen Signalausgang 58 aufweisen und konfiguriert sein, um unter Verwendung des Signalausgangs 58 den Schlüssel 12 zu senden. Der Signaleingang 56 und der Signalausgang 58 können Teile von getrennten oder einen gemeinsamen Kommunikationsschnittstelle sein. Die Vorrichtung 57 kann ausgebildet sein, um das Eingangssignal 44 an die Vorrichtung 40 zu senden. Basierend hierauf kann die Vorrichtung 40 den Schlüssel 12 erstellen und diesen an die Vorrichtung 57 zurücksenden. Die Vorrichtung 57 kann aufbauend hierauf überprüfen, ob die Vorrichtung 40 das gemeinsame Geheimnis (shared secret) kennt, um basierend auf der Eingangsinformation des Eingangssignals 44 den passenden Schlüssel 12 zu erzeugen. Anstelle des Schlüssels 12 kann die Vorrichtung 40 auch ausgebildet sein, um eine unter Verwendung des Schlüssels 12 codierte oder decodierte Nachricht an die Vorrichtung 57 zu senden. In diesem Fall kann die verschlüsselte oder unverschlüsselte Nachricht das geteilte Geheimnis sein.

Alternativ oder zusätzlich kann die Vorrichtung 40 ausgebildet sein, um das Eingangssignal 44 mit dem Signalausgang 58 zu versenden und um ansprechend hierauf den Schlüssel 12 zu empfangen. Die Vorrichtung 40 kann somit ausgebildet sein, um die Bitfolge des Eingangssignals 44 an dem Signalausgang 58 bereitzustellen und kann an dem Signaleingang 56 ein Eingangssignal empfangen, das einen Referenzschlüssel, den Schlüssel 12, aufweist. Die Vorrichtung 40 kann in diesem Fall ausgebildet sein, um den Referenzschlüssel mit dem selbstgenerierten Schlüssel zu vergleichen, und um basierend auf einem Vergleichsergebnis eine Identität der Vorrichtung 57 zu bewerten.

Unter erneuter Bezugnahme auf die Fig. 2a und 2b kann die Vorrichtung 20 ausgebildet sein, um in zeitlich unterschiedlichen Zeitintervallen ein erstes und ein hiervon verschiedenes zweites Licht durch den Lichtpfad zu leiten. Bei den voneinander verschiedenen Licht-Einstellungen kann es sich beispielsweise um eine voneinander verschiedene Wellenlänge handeln. Basierend auf jeder voneinander verschiedenen Wellenlänge kann ein voneinander verschiedenes Interferenzmuster an der Ausgangsseite 22 des Lichtpfades erhalten werden, so dass basierend auf unterschiedlichen Wellenlängen unterschiedliche Schlüssel von der Auswerteeinrichtung 28 bereitgestellt werden können. Die Auswerteeinrichtung kann konfiguriert sein, um die so erhaltenen Schlüssel zu einem Gesamtschlüssel zu kombinieren, etwa durch Aneinanderfügen oder Miteinanderverknüpfen der einzelnen Bits.

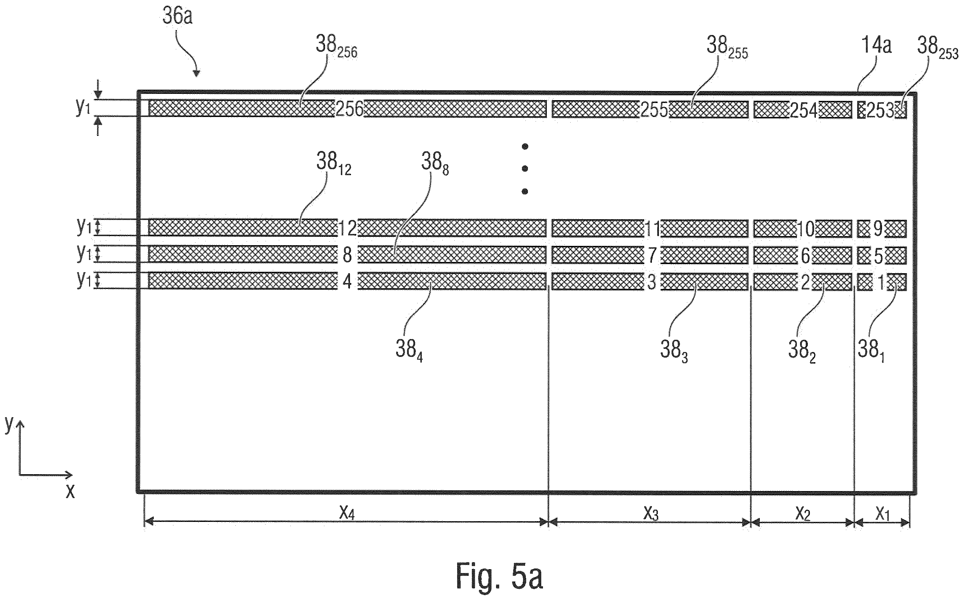

Fig. 5a zeigt eine schematische Aufsicht auf eine Elektrodenanordnung 36a eines Multimode-Interferometers 14a, das in erfindungsgemäßen Vorrichtungen eingesetzt werden kann. Die Elektrodenanordnung 36a umfasst eine Anzahl von zumindest 256 Elektroden, die in vier Spalten angeordnet sind, wobei die Abmessungen der Elektroden innerhalb der jeweiligen Spalte gleich ist und abhängig von der Spalte x_{1,} x₂, x₃ oder x₄ betragen kann. Eine Anzahl von 256 Elektroden kann beispielsweise mittels eines zumindest 256 Bit umfassenden Signals angesteuert werden. Eine andere Anzahl von Elektrode kann ohne Einschränkung verwendet werden, etwa mehr als 10, mehr als 50, mehr als 100 oder mehr als 256. Die Elektroden einer Zeile, beispielsweise die Elektroden 38₁, 38₂, 38₃ und 38₄ können somit unterschiedliche Abmessungen der x-Richtung und gleiche Abmessungen entlang der y-Richtung aufweisen. Ferner können die Elektroden innerhalb einer Spalte, beispielsweise die Elektroden 38₄, 38₆, 38₁₂, ..., 38₂₅₆ eine gleiche Abmessung entlang der y-Richtung aufweisen, etwa die Abmessung y₁. Das bedeutet, verglichen mit der Fig. 2a kann die Asymmetrie auch lediglich einer der Richtungen x oder y vorherrschen. Optional können die Die Elektroden 38₄, 38₈, 38₁₂, ..., 38₂₅₆ zwar die selbe Breite aufweisen, aber bezogen auf das MMI immer noch asymmetrisch angeordnet sein, etwa durch Versatz oder eine unterschiedliche Abmessung in y₁ oder dergleichen.

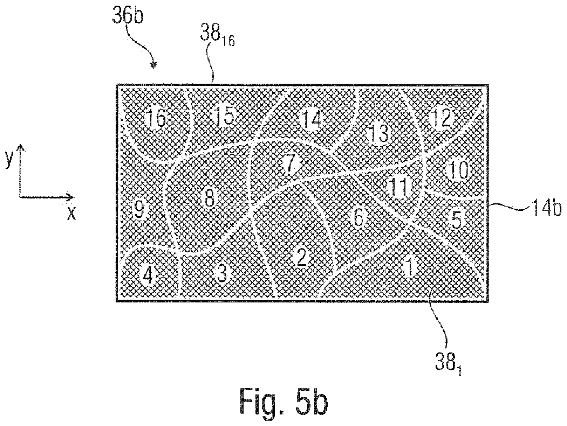

Fig. 5b zeigt eine schematische Aufsicht auf einen Elektrodenanordnung 36b eines Multimode-Interferometers 14v, das in Vorrichtungen gemäß hierin beschriebenen Ausführungsbeispielen eingesetzt werden kann. Die Elektroden 38₁, bis 38₁₆ sind bezüglich ihrer Oberflächengeometrie asymmetrisch und weisen jeweils eine Freiformfläche auf. Elektrodenlängen (Abmessung entlang x-Richtung) und Elektrodenbreiten (Abmessung entlang y-Richtung) können innerhalb der Elektrode individuell variieren und zu einer individuellen Oberflächengeometrie der jeweiligen Elektrode 38₁ bis 38₁₆ führen.

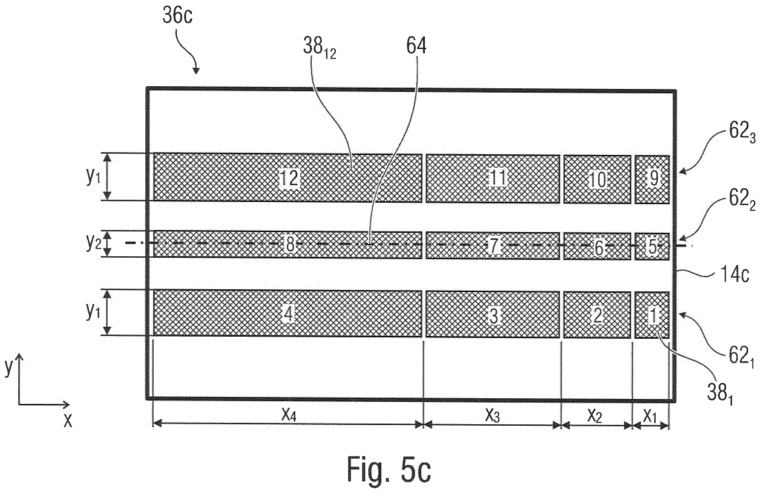

Fig. 5c zeigt eine schematische Aufsicht auf eine Elektrodenanordnung 36c eines Multimode-Interferometers 14c, das in Vorrichtungen gemäß hierin beschriebenen Ausführungsbeispielen eingesetzt werden kann. Die Elektrodenanordnung 36c weist bezüglich der verwendeten Geometrie symmetrische Elektrode 38₁ bis 38₁₂ auf. Die Elektroden 38₁ bis 38₁₂ können in einer Anzahl von Zeilen 62₁ bis 62₃ angeordnet sein, beispielsweise drei. Die Zeilen 62₁ bis 62₃ können symmetrisch bezüglich einer axialen Symmetrieachse 64 angeordnet sein, die beispielsweise einen mittleren Lichtausbreitungspfad des Lichtpfades 16 beschreiben kann. So können die Zeilen 62₁ und 62₃ zwar abseits der Symmetrieachse 64 angeordnet sein aber bezüglich der Elektrodenbreiten, d. h. Ausdehnung entlang der y-Richtung eine identische Abmessung y₁ aufweisen. Ferner können Zeilen 62₁ und 62₃ mit einem gleichen Abstand zu der Symmetrieachse 64 auf beiden Seiten derselben angeordnet sein. Die Zeile 62₂ kann beispielsweise auf und mithin symmetrisch zu der Symmetrieachse 64 angeordnet sein und eine gleiche Abmessung entlang der y-Richtung oder eine hiervon verschiedene Abmessung y₂ aufweisen. Die Ansteuereinrichtung 42 kann ausgebildet sein, um an die Zeilen 62₁ und 62₃ beispielsweise voneinander verschiedene elektrische Spannungen anzulegen, um so eine Asymmetrie zu erhalten. Das bedeutet, dass die Elektroden 38₁ bis 38₁₂ auch geometrisch symmetrisch gebildet sein können und eine Asymmetrie mit einer asymmetrischen Ansteuerung der Elektroden erhalten werden kann.

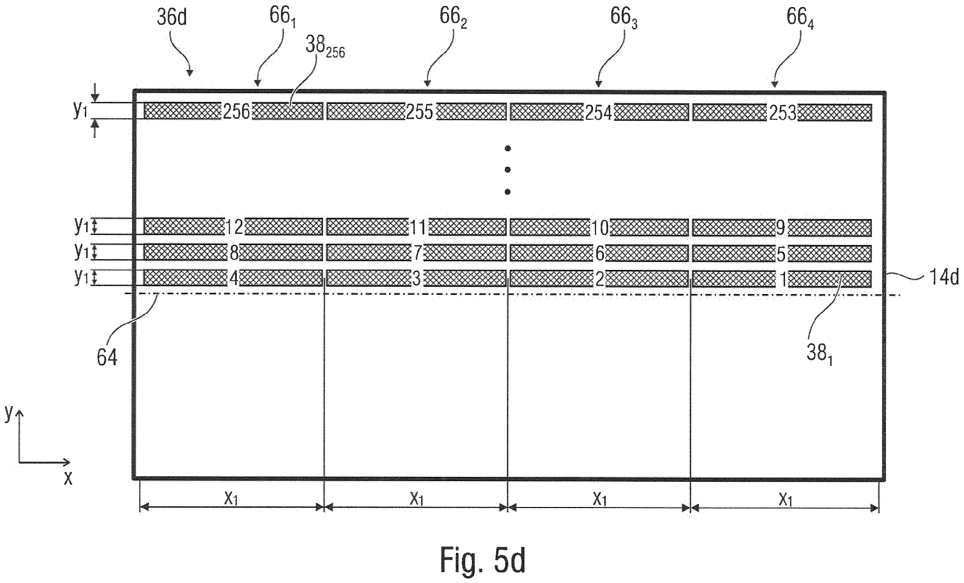

Fig. 5d zeigt eine schematische Aufsicht auf eine Elektrodenanordnung 36d eines Multimode-Interferometers 14d, das in Vorrichtungen gemäß Ausführungsbeispielen eingesetzt werden kann.

Die Elektroden 38₁ bis 38₂₅₆ können in einem zweidimensionalen Array mit Zeilen und Spalten angeordnet sein, wobei sämtliche Elektroden eine gleiche Abmessung entlang der x-Richtung, d. h. x₁ und entlang der y-Richtung, d. h. y₁ aufweisen können. Eine Asymmetrie kann durch eine elektrisch voneinander verschiedene Ansteuerung der Elektroden 38₁ bis 38₂₅₆ erhalten werden. Alternativ oder zusätzlich kann eine Asymmetrie dadurch erhalten werden, dass die Elektroden asymmetrisch bezüglich der Symmetrieachse 64 angeordnet werden. Es kann ausreichend sein, lediglich die Elektroden in unterschiedlichen Spalten 66₁ bis 66₄ mit voneinander verschiedenen elektrischen Potenzialen zu beaufschlagen.

Es können weitere Elektroden angeordnet sein, etwa symmetrisch bezüglich der dargestellten Elektroden 38₁ bis 38₂₅₆ und bezogen auf die Symmetrieachse 64. In diesem Fall kann es ebenfalls vorteilhaft sein, um die dann symmetrisch zusätzlich angeordneten Elektroden mit unterschiedlichen elektrischen Potenzialen zu beaufschlagen, insbesondere bezüglich einer hierzu symmetrischen Elektrode innerhalb derselben Spalte 66₁ bis 66₄.

In anderen Worten können Elektroden entsprechend ihren Zeile mit unterschiedlichen Spannungen beaufschlagt werden, um im Fall der Fig. 5c die Symmetrie zu brechen und eine Asymmetrie zu erhalten. Im Fall der Fig. 5d können entsprechend Ihrer Spalte Elektroden mit unterschiedlicher, beispielsweise wachsender, elektrischer Spannung beaufschlagt werden, was einen ähnlichen oder gleichen Effekt erzeugen kann, wie länger werdende Elektroden entlang der negativen x-Richtung in Fig. 2a.

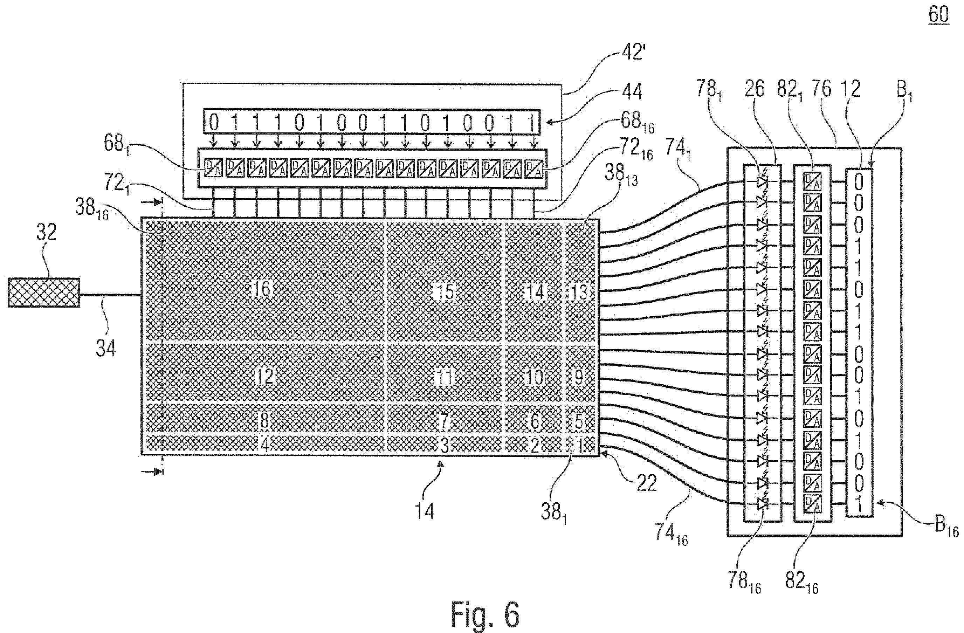

Fig. 6 zeigt eine schematische Aufsicht auf eine Vorrichtung 60 gemäß einem Ausführungsbeispiel, die ähnlich aufgebaut sein kann, wie die Vorrichtung 20. Die Vorrichtung 60 kann eine Ansteuereinrichtung 42' aufweisen, die konfiguriert ist, um basierend auf dem Eingangssignal 44 mit einer Anzahl von beispielsweise 16 Bits eine korrespondierende Anzahl von Digital-Analog-Wandlern 68₁ bis 68₁₆ anzusteuern, deren analoge Ausgangssignale 72₁ bis 72₁₆ verwendet werden, um die Elektroden 38₁ bis 38₁₆ anzusteuern. An der Ausgangsseite 22 können Wellenleiter 74₁ bis 74₁₆ mit dem Multimode-Interferometer 14 verbunden sein und ausgebildet sein, um jeweils ein Lichtsignal von der Ausgangsseite 22 auszukoppeln. Beispielsweise kann jeweils einer der Wellenleiter 74₁ bis 74₁₆ mit einem Teilbereich 54₁ bis 54₁₆ gemäß Fig. 3 verbunden sein. Eine Berechnungseinrichtung 76 der Vorrichtung 60 kann die Empfangseinrichtung 26 aufweisen, die beispielsweise ein Array von Photodetektoren 78₁ bis 78₁₆ aufweisen kann, um jeweils eines der Signale der Wellenleiter 74₁ bis 74₁₆ zu empfangen. Alternativ kann auch eine geringere Zahl von Photodetektoren angeordnet sein und diese beispielsweise in einem Zeitmultiplex genutzt werden.

Die Berechnungseinrichtung 76 kann eine Anzahl von Analog-Digital-Wandlern 82₁ bis 82₁₆ aufweisen, von denen jeweils einer mit einem Photodetektor 78₁ bis 78₁₆ gekoppelt sein kann, wobei auch hier Multiplex-Konzepte zum Einsatz kommen können. Basierend auf einer Wandlung des Lichtsignals eines einzelnen Wellenleiters 74₁ bis 74₁₆ bzw. eines Teilbereichs kann jeweils ein Bit B₁ bis B₁₆ des Schlüssels 12 erhalten werden.

Das Bilden der Bits B₁ bis B₁₆ kann in der Berechnungseinrichtung erfolgen, die die Bitwerte zusammensetzen kann.

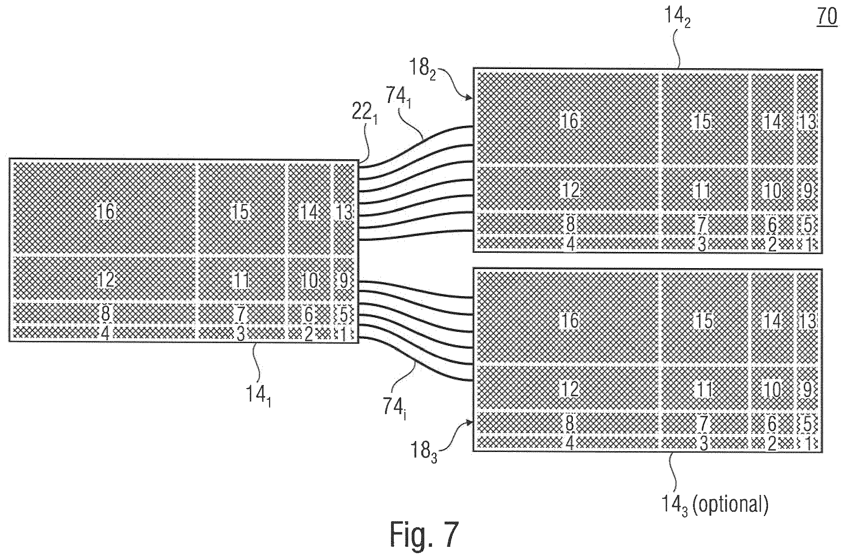

Fig. 7 zeigt eine schematische Aufsicht auf eine Vorrichtung 70 gemäß einem Ausführungsbeispiel, die zumindest ein erstes Multimode-Interferometer 14₁ und ein zweites Multimode-Interferometer 14₂ aufweist, die jeweils gleich oder verschieden voneinander gebildet sein können und jeweils beispielsweise gemäß den Erläuterungen im Zusammenhang mit dem Multimode-Interferometer 14, 14a, 14b, 14c und/oder 14d gebildet sein können. Das Multimode-Interferometer 14₂ ist an seiner Eingangsseite 18₂ mit einer Ausgangsseite 22₁ des Multimode-Interferometers 14₁ gekoppelt, wobei das Multimode-Interferometer 14₂ die Interferenzmuster an der Ausgangsseite 22₁ teilweise oder vollständig erhalten kann. Eine Verbindung zwischen der Ausgangsseite 22₁ und der Eingangsseite 18₂ kann über Wellenleiter 74 erfolgen. Das bedeutet, dass das Multimode-Interferometer 14₂ bereits beeinflusstes Licht als Eingangssignal erhalten kann und dieses Licht weiter beeinflussen kann. Ein oder mehrere weitere Multimode-Interferometer 14₃ können optional angeordnet sein und parallel zu dem Multimode-Interferometer 14₂ angeordnet sein. Beispielsweise kann das Multimode-Interferometer 14₃ einen anderen Anteil der lokalen Intensitätsverteilung erhalten als das Multimode-Interferometer 14₂, etwa basierend auf voneinander verschiedenen Teilbereichen 58 gemäß Fig. 3. Das dritte Multimode-Interferometer 14₃, das parallel zu dem zweiten Multimode-Interferometer 14₂ mit dem Ausgang des Lichtpfades 16 gekoppelt sein kann, kann deshalb ausgebildet sein, um eine von dem zweiten Multimode-Interferometer 14₂ verschiedene lokale Intensitätsverteilung des Lichtpfades zu erhalten. Das bedeutet, dass unterschiedliche Teilbereiche der Ausgangsseite 22₁ mit unterschiedlichen Eingangsseiten 18₂ oder 18₃ unterschiedlicher Multimode-Interferometer gekoppelt sein können. In anderen Worten zeigt Fig. 7 eine Kaskadierung von Multimode-Interferometern.

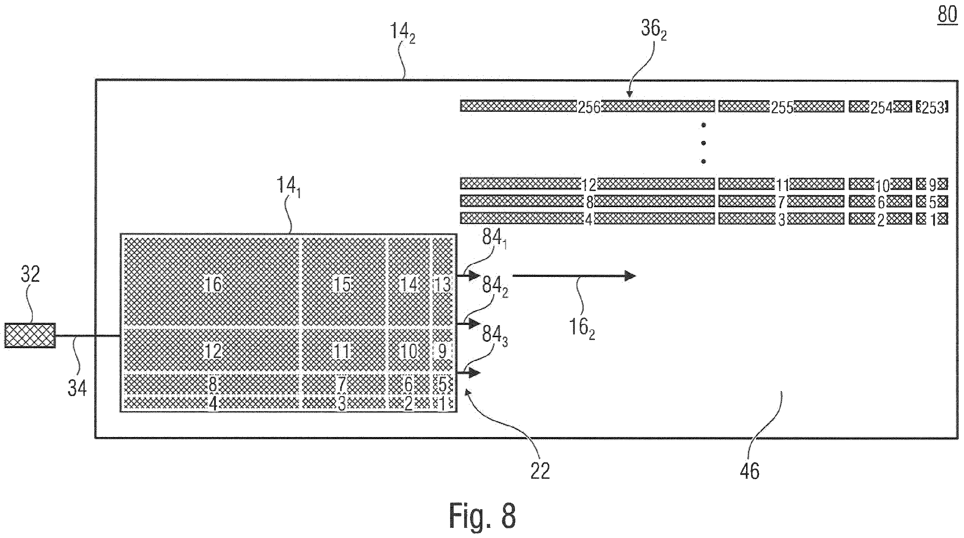

Fig. 8 zeigt eine schematische Aufsicht auf eine Vorrichtung 80 gemäß einem Ausführungsbeispiel, bei der das Multimode-Interferometer 14₁ verschachtelt in einem weiteren Multimode-Interferometer 14₂ angeordnet ist. Das Multimode-Interferometer 14₁ kann so gebildet sein, dass der Lichtpfad zwei oder mehr Ausgänge 84₁ bis 84₃ aufweist. Diese können basierend auf voneinander verschiedenen Teilbereichen der Ausgangsseite 22 verschiedene räumliche Intensitätsverteilungen des Lichtpfades ausgeben und an unterschiedlichen lateralen Stellen mit einem Eingang des Multimode-Interferometer 14₂ koppeln bzw. in dessen Lichtpfad 16₂ einkoppeln. Das bedeutet, dass an lateral unterschiedlichen Stellen des Lichtpfades 16₂ des äußeren Multimode-Interferometers 14₂ unterschiedliche räumliche Intensitätsverteilungen des inneren Multimode-Interferometers 14₂ eingekoppelt werden können. Der Lichtpfad 16₂ kann durch ein eigenes Array oder eine eigene Elektrodenanordnung 36₂ angesteuert werden, um eine Beeinflussung der Teilsignale, die von den Ausgängen 84₁ bis 84₃ erhalten werden, auszuführen. Die Position der Ankoppelung des Wellenleiters an das jeweilige Multimode-Interferometer kann variiert werden und kann mittig sein, wobei dies nicht erforderlich ist.

Die Vorrichtungen 70 und 80, d. h. die Kombination mehrerer Multimode-Interferometer ermöglicht es, eine Robustheit der Schlüssel zu erhöhen, da die mögliche Beeinflussung und mithin die zu berücksichtigenden Rechenoperationen ansteigen und eine Nachbildung oder Extrapolation des Schlüssels entsprechend aufwendiger wird.

Obwohl die serielle Hintereinanderschaltung bzw. Kaskadierung von MMI in Fig. 7 und die Verschachtelung in Fig. 8 als voneinander getrennte Ausführungen beschrieben sind, können beide auch kombiniert miteinander angeordnet werden, das bedeutet, kaskadierte MMIs können verschachtelt werden und/oder verschachtelte MMIs können kaskadiert werden.

Ausführungsbeispiele umfassen neben der Anwendung eines Multimode-Interferometers auch Multimode-Interferometer, die in Abwesenheit eines Wellenleiters mit der Lichtquelle, etwa einem Laser, verbunden sein können. Ausführungsbeispiele beziehen sich ferner auf Krypto-MMI, die nacheinander kaskadierte MMIs aufweisen, siehe Vorrichtung 70, und/oder ineinander verschachtelte MMIs aufweisen, siehe Vorrichtung 80.

Ausführungsbeispiele beziehen sich auf einen kryptographischen Hardwareschlüssel mit elektrooptisch programmierbaren Multimode-Interferometer als Kernkomponente. Die Ausführungsbeispiele ermöglichen eine Komponente, welche ein elektrisches digitales Eingangssignal eindeutig in ein elektrisches digitales Ausgangssignal wandeln kann. Hierbei kann die Methode zur Wandlung, d. h. Verschlüsselung, des Eingangssignals auf physikalischen Effekten beruhen, was gegenüber Software- oder Hardware basierten Algorithmen vorteilhaft ist. Die Ausführungsbeispiele zeigen ein elektrooptisch programmierbares Multimode-Interferometer (MMI) als Kernkomponente eines kryptographischen Hardwareschlüssels, der auch als Krypto-MMI bezeichnet werden kann.

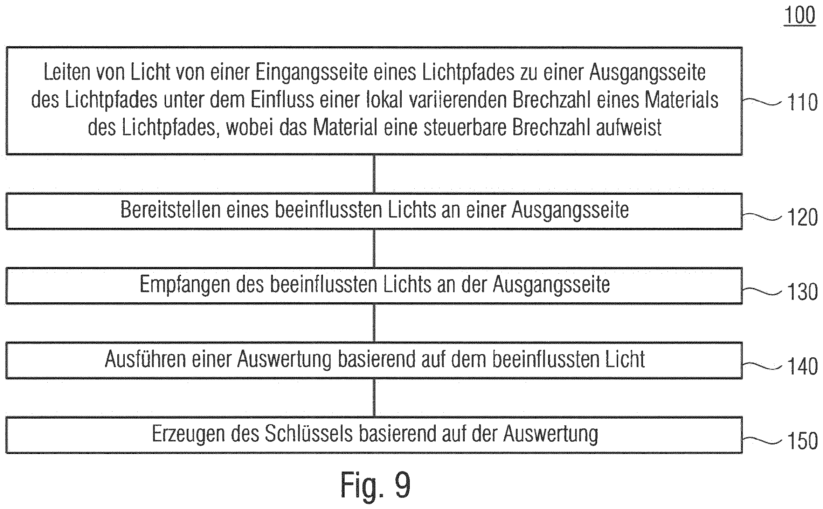

Fig. 9 zeigt ein schematisches Ablaufdiagramm eines Verfahrens 100 gemäß einem Ausführungsbeispiel. Ein Schritt 110 umfasst eine Leiten von Licht von einer Eingangsseite eines Lichtpfades zu einer Ausgangsseite des Lichtpfades unter dem Einfluss einer lokal variierenden Brechzahl eines Materials des Lichtpfades, das eine steuerbare Brechzahl aufweist. Dies kann das Steuern der Brechzahl umfassen, so dass das Material lokal in seiner Brechzahl variiert. Ein Schritt 120 umfasst ein Bereitstellen eines beeinflussten Lichts an einer Ausgangsseite des Lichtpfades. Ein Schritt 130 umfasst ein Empfangen des beeinflussten Lichts an der Ausgangsseite. Ein Schritt 140 umfasst ein Ausführen einer Auswertung basierend auf dem beeinflussten Licht. Ein Schritt 150 umfasst ein Erzeugen des Schlüssels basierend auf der Auswertung.

Obwohl hierin beschriebene Ausführungsbeispiele eine Anordnung von 12, 16 oder 256 Elektroden und eine Verwendung einer entsprechenden Anzahl von Bits zur Ansteuerung offenbaren, kann eine hiervon verschiedene Anzahl von Elektroden genutzt werden und/oder eine von einem Bit verschiedene Anzahl von Bits genutzt werden, um eine Elektrode anzusteuern.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Vorrichtung (10, 20, 40, 60, 70, 80, 90) zum Erzeugen eines Schlüssels (12) mit:
einem Multimode-Interferometer (14;14a-d), das mit einer Lichtquelle (32) koppelbar ist und einen Lichtpfad (16) mit einem Material (46), das eine steuerbare Brechzahl aufweist, umfasst, wobei der Lichtpfad (16) ausgebildet ist, um Licht an einer Eingangsseite (18) zu erhalten, und um das Licht unter dem Einfluss einer lokal variierenden Brechzahl (n₁, n₂) des Materials (46) zu beeinflussen, um ein beeinflusstes Licht an eine Ausgangsseite (22) bereitzustellen;
einer Empfangseinrichtung (26), die ausgebildet ist, um das beeinflusste Licht an der Ausgangsseite (22) zu empfangen; und
einer Auswerteeinrichtung (28), die ausgebildet ist, um eine Auswertung basierend auf dem beeinflussten Licht auszuführen, und um basierend auf der Auswertung den Schlüssel (12) zu erzeugen;
einer Elektrodenanordnung (36; 36a-d) aufweist, die ausgebildet ist, um die lokal variierende Brechzahl (n₁, n₂) basierend auf lokal variierenden elektrischen Feldern (E) der Elektrodenanordnung (36; 36a-d) zu erzeugen;
wobei die Empfangseinrichtung (26) ein Array von Photodetektoren aufweist, und die Auswerteeinrichtung (28) ausgebildet ist, um für jeden der Photodetektoren eine Schwellwertentscheidung auszuführen, ob eine in dem jeweiligen Photodetektor erfasste Größe in eine binäre 0 oder eine binäre 1 zu überführen ist, und um durch Aneinanderreihung der Schwellwertentscheidungen eine Bitfolge als Schlüssel (12) zu erhalten.

2. Vorrichtung gemäß Anspruch 1, die konfiguriert ist, um basierend auf der lokal variierenden Brechzahl (n₁, n₂) eine lokal variierende Beeinflussung des Lichts zu erhalten.

3. Vorrichtung gemäß Anspruch 1 oder 2, die eine Lichtquelle (32) umfasst, die mit dem Lichtpfad (16) verbunden ist und die ausgebildet ist, um das Licht auszusenden.

4. Vorrichtung gemäß einem der vorangehenden Ansprüche, bei dem die Empfangseinrichtung (26) ein Filter aufweist, das konfiguriert ist, um das beeinflusste Licht zu filtern und um ein schmalbandiges gefiltertes Licht an einem Filterausgang bereitzustellen, wobei die Auswerteeinrichtung (28) ausgebildet ist, um die Auswertung basierend auf dem schmalbandigen gefilterten Licht auszuführen.

5. Vorrichtung gemäß einem der vorangehenden Ansprüche, bei der die Auswerteeinrichtung (28) ausgebildet ist, um eine lokale Intensitätsverteilung des beeinflussten Lichts oder eines gefilterten Lichts zu bestimmen, und um basierend auf der lokalen Intensitätsverteilung den Schlüssel (12) zu erzeugen.

6. Vorrichtung gemäß Anspruch 5, bei dem die Auswerteeinrichtung ausgebildet ist, um die lokale Intensitätsverteilung in voneinander verschiedenen Teilbereichen (54₁, 54₁₆) eines Gesamtbereichs des Lichtpfades (16) auszuführen, wobei der Schlüssel (12) eine Mehrzahl von Schlüsselabschnitten (B₁, B₁₆) umfasst, wobei jeder Schlüsselabschnitt einem Teilbereich (54₁, 54₁₆) zugeordnet ist.

7. Vorrichtung gemäß einem der vorangehenden Ansprüche, wobei die Elektrodenanordnung eine Mehrzahl von räumlich getrennten Elektrodenelementen (38₁-38₂₅₆) aufweist, die in einem zweidimensionalen Array angeordnet sind, wobei die Elektroden bezüglich der Beeinflussung des durch den Lichtpfad geleiteten Lichts bezüglich zumindest einer Richtung (x, y) des zweidimensionalen Arrays asymmetrisch gebildet sind.

8. Vorrichtung gemäß einem der vorangehenden Ansprüche, bei der die Elektrodenanordnung eine Mehrzahl von räumlich getrennten Elektrodenelementen (38) aufweist, die in Zeilen (62) und Spalten (66) eines zweidimensionalen Arrays angeordnet sind;
wobei Elektroden (38) innerhalb einer Zeile (62) eine voneinander verschiedene und innerhalb der Zeile eindeutige Abmessung (x₁, x₄) entlang einer Zeilenrichtung (x) aufweisen; und/oder
wobei Elektroden (38) innerhalb einer Spalte (66) eine voneinander verschiedene und innerhalb der Spalte (66) eindeutige Abmessung entlang einer Spaltenrichtung (y) aufweisen.

9. Vorrichtung gemäß Anspruch 8, bei der ein Quotient der Abmessung zweier beliebiger benachbarter Elektroden (38) entlang der Zeilenrichtung (x) einen einheitlichen Quotientenwert aufweist; und/oder
bei der ein Quotient der Abmessung zweier beliebiger Elektroden (38) entlang der Spaltenrichtung (y) den einheitlichen Quotientenwert aufweist.

10. Vorrichtung gemäß einem der vorangehenden Ansprüche, bei der das Multimode-Interferometer (14;14a-c) ausgebildet ist, um die Brechzahl (n₁, n₂) des Materials (46) lokal variierend basierend auf einer Bitfolge (46) umfassend eine erste Anzahl (n) von Bits zu variieren, wobei die Auswerteeinrichtung (28) ausgebildet ist, um für den Schlüssel (12) eine Bitfolge mit der ersten Anzahl (n) von Bits für den Schlüssel bereitzustellen.

11. Vorrichtung gemäß einem der vorangehenden Ansprüche, bei der der Schlüssel ein erster Schlüssel (12) ist, wobei die Vorrichtung ausgebildet ist, um während eines ersten Zeitintervalls ein erstes Licht durch den Lichtpfad (16) zu leiten, um den ersten Schlüssel zu erhalten, und um während eines zweiten Zeitintervalls ein zweites Licht durch den Lichtpfad (16) zu leiten, um einen zweiten Schlüssel zu erhalten, wobei die Auswerteeinrichtung (28) konfiguriert ist, um den ersten Schlüssel und den zweiten Schlüssel zu einem Gesamtschlüssel zu kombinieren.

12. Vorrichtung gemäß einem der vorangehenden Ansprüche, bei der das Multimode-Interferometer ein erstes Multimode-Interferometer (14₁) ist, wobei die Vorrichtung zumindest ein zweites Multimode-Interferometer (14₂) aufweist, das mit einem Ausgang des Lichtpfades (16) gekoppelt ist.

13. Vorrichtung gemäß einem der vorangehenden Ansprüche, bei der das Multimode-Interferometer ein erstes Multimode-Interferometer (14₁) ist, das verschachtelt in einem zweiten Multimode-Interferometer (14₂) angeordnet ist.

14. Vorrichtung gemäß einem der vorangehenden Ansprüche, bei der das Material (46) zumindest eines aus einem elektrooptischen Material, einem magnetooptischen Material, einem thermooptischen Material und einem spannungsoptischen Material ist.

15. Verfahren (100) zum Erzeugen eines Schlüssels (12) mit folgenden Schritten:
Leiten (110) von Licht von einer Eingangsseite eines Lichtpfades zu einer Ausgangsseite des Lichtpfades unter dem Einfluss einer lokal variierenden Brechzahl eines Materials des Lichtpfades, wobei das Material eine steuerbare Brechzahl aufweist;
Erzeugen der lokal variierenden Brechzahl (n₁, n₂) mit einer Elektrodenanordnung basierend auf lokal variierenden elektrischen Feldern (E) der Elektrodenanordnung (36; 36a-d);
Bereitstellen (120) eines beeinflusstes Lichts an der Ausgangsseite;
Empfangen (130) des beeinflussten Lichts an der Ausgangsseite mit einer Empfangseinrichtung (26), die ein Array von Photodetektoren aufweist;
Ausführen (140) einer Auswertung basierend auf dem beeinflusste Licht durch Ausführen einer Schwellwertentscheidung für jeden der Photodetektoren, ob eine in dem jeweiligen Photodetektor erfasste Größe, in eine binäre 0 oder eine binäre 1 zu überführen ist; und
Erzeugen (150) des Schlüssels basierend auf der Auswertung durch Aneinanderreihung der Schwellwertentscheidungen.

## Claims

1. A device (10, 20, 40, 60, 70, 80, 90) for generating a key (12), comprising:
a multimode interferometer (14; 14a-d) which can be coupled to a light source (32) and comprises a light path (16) having a material comprising a controllable refraction index, the light path (16) being configured to obtain light at an input side (18) and influence the light under the influence of a locally varying refraction index (n₁, n₂) of the material (46) in order to provide influenced light at an output side (22);
receiving means (26) configured to receive the influenced light at the output side (22); and
evaluating means (28) configured to perform an evaluation based on the influenced light and to generate the key (12) based on the evaluation;
an electrode arrangement (36; 36a-d) configured to generate the locally varying refraction index (n₁, n₂) based on locally varying electrical fields (E) of the electrode arrangement (36; 36a-d);
wherein the receiving means (26) comprises an array of photodetectors and the evaluating means (28) is configured to perform, for each of the photodetectors, a threshold value decision as to whether the quantity detected in the respective photodetector is to be transferred to a binary 0 or a binary 1 and to obtain a bit sequence as the key (12) by lining up the threshold value decisions.

2. The device in accordance with claim 1, configured to obtain a locally varying influence of the light based on the locally varying refraction index (n₁, n₂).

3. The device in accordance with claim 1 or 2, comprising a light source (32) which is connected to the light path (16) and configured to emit the light.

4. The device in accordance with any of the preceding claims, wherein the receiving means (26) comprises a filter configured to filter the influenced light and to provide narrow-band filtered light at a filter output, the evaluating means (28) being configured to perform the evaluation based on the narrow-band filtered light.

5. The device in accordance with any of the preceding claims, wherein the evaluating means (28) is configured to determine a local intensity distribution of the influenced light or filtered light and to generate the key (12) based on the local intensity distribution.

6. The device in accordance with claim 5, wherein the evaluating means is configured to perform the local intensity distribution in mutually different sub-regions (54₁, 54₁₆) of a total region of the light path (16), wherein the key (12) comprises a plurality of key portions (B₁, 8₁₆), each key portion being associated to a sub-region (54₁, 54₁₆).

7. The device in accordance with any of the preceding claims, wherein the electrode arrangement comprises a plurality of spatially separate electrode elements (38₁-38₂₅₆) arranged in a two-dimensional array, wherein the electrodes are formed to be asymmetrical relative to at least one direction (x, y) of the two-dimensional array, with reference to influencing the light guided through the light path.

8. The device in accordance with any of claims 9 to 12, wherein the electrode arrangement comprises a plurality of spatially separate electrode elements (38) which are arranged in rows (62) and columns (66) of a two-dimensional array;
wherein electrodes (38) within one row (62) comprise a mutually different dimension (x₁, x₄), unambiguous within the row, along a row direction (x); and/or
wherein electrodes (38) within a column (66) comprise a mutually different dimension, unambiguous within the column (66), along a column direction (y).

9. The device in accordance with claim 8, wherein a quotient of the dimension of any two neighboring electrodes (38) along the row direction (x) comprises a uniform quotient value; and/or
wherein a quotient of the dimension of any two electrodes (38) along the column direction (y) comprises the uniform quotient value.

10. The device in accordance with any of the preceding claims, wherein the multimode interferometer (14; 14a-c) is configured to vary the refraction index (n₁, n₂) of the material (46) in a locally varying manner based on a bit sequence (46) comprising a first number (n) of bits, wherein the evaluating means (28) is configured to provide, for the key (12), a bit sequence having the first number (n) of bits for the key.

11. The device in accordance with any of the preceding claims, wherein the key is a first key (12), the device being configured to guide first light through the light path (16) during a first time interval in order to obtain the first key, and to guide second light through the light path (16) during a second time interval in order to obtain a second key, wherein the evaluating means (28) is configured to combine the first key and the second key to form a total key.

12. The device in accordance with any of the preceding claims, wherein the multimode interferometer is a first multimode interferometer (14₁), the device comprising at least a second multimode interferometer (14₂) coupled to an output of the light path (16).

13. The device in accordance with any of the preceding claims, wherein the multimode interferometer is a first multimode interferometer (14₁) which is arranged to be interleaved in a second multimode interferometer (14₂).

14. The device in accordance with any of the preceding claims, wherein the material (46) comprises at least one of an electro-optical material, a magneto-optical material, a thermo-optical material and a voltage-optical material.

15. A method (100) for generating a key (12), comprising the steps of:
guiding (110) light from an input side of a light path to an output side of the light path under the influence of a locally varying refraction index of a material of the light path, the material comprising a controllable refraction index;
generating the locally varying refraction index (n₁, n₂) by an electrode arrangement based on locally varying electrical fields (E) of the electrode arrangement (36; 36a-d);
providing (120) influenced light at the output side;
receiving (130) the influenced light at the output side by receiving means which comprises an array of photodetectors;
performing (140) an evaluation based on the influenced light by performing a threshold value decision, for each of the photodetectors, as to whether a quantity detected in the respective photodetector is to be transferred to a binary 0 or a binary 1; and
generating (150) the key based on the evaluation by lining up the threshold value decisions.

## Revendications

1. Dispositif (10, 20, 40, 60, 70, 80, 90) pour générer une clé (12), avec:
un interféromètre multimode (14; 14a à d) qui peut être couplé à une source de lumière (32) et qui comporte un trajet de lumière (16) avec un matériau (46) qui présente un indice de réfraction contrôlable, où le trajet de lumière (16) est conçu pour recevoir de la lumière à un côté d'entrée (18), pour influencer la lumière sous l'influence d'un indice de réfraction (n₁, n₂) variable localement du matériau (46), pour fournir une lumière influencée à un côté de sortie (22);
un moyen de réception (26) qui est conçu pour recevoir la lumière influencée du côté de sortie (22); et
un moyen d'évaluation (28) qui est conçu pour effectuer une évaluation sur base de la lumière influencée et pour générer la clé (12) sur base de l'évaluation;
un aménagement d'électrodes (36; 36a à d) qui est conçu pour générer l'indice de réfraction (n₁, n₂) variable localement sur base de champs électriques (E) variables localement de l'aménagement d'électrodes (36; 36a à d);
dans lequel le moyen de réception (26) présente un réseau de photo-détecteurs, et le moyen d'évaluation (28) est conçu pour effectuer, pour chacun des photo-détecteurs, une décision de valeur seuil pour savoir si une grandeur détectée dans le photo-détecteur respectif doit être convertie en un 0 binaire ou en un 1 binaire et pour obtenir, par une juxtaposition des décisions de valeur de seuil, une séquence de bits comme clé (12).

2. Dispositif selon la revendication 1, qui est configuré pour obtenir, sur base de l'indice de réfraction (n₁, n₂) variable localement, une influence localement variable de la lumière.

3. Dispositif selon la revendication 1 ou 2, qui comporte une source de lumière (32) qui est connectée au trajet de lumière (16) et qui est conçue pour émettre la lumière.

4. Dispositif selon l'une des revendications précédentes, dans lequel le moyen de réception (26) présente un filtre qui est configuré pour filtrer la lumière influencée et pour fournir une lumière filtrée de bande étroite à une sortie de filtre, dans lequel le moyen d'évaluation (28) est conçu pour effectuer l'évaluation sur base de la lumière filtrée de bande étroite.

5. Dispositif selon l'une des revendications précédentes, dans lequel le moyen d'évaluation (28) est conçu pour déterminer une répartition d'intensité locale de la lumière influencée ou d'une lumière filtrée, et pour générer la clé (12) sur base de la répartition d'intensité locale.

6. Dispositif selon la revendication 5, dans lequel le moyen d'évaluation est conçu pour réaliser la répartition d'intensité locale dans des zones partielles (54₁, 54₁₆) différentes l'une de l'autre d'une zone d'ensemble du trajet de lumière (16), dans lequel la clé (12) comporte une pluralité de segments de clé (B₁, B₁₆), dans lequel chaque segment de clé est associée à une zone partielle (54₁, 54₁₆).

7. Dispositif selon l'une des revendications précédentes, dans lequel l'aménagement d'électrodes présente une pluralité d'éléments d'électrode spatialement séparés (38₁ à 38₂₅₆) qui sont disposés selon un réseau bidimensionnel, dans lequel les électrodes sont formées de manière asymétrique en ce qui concerne l'influence de la lumière guidée à travers le trajet de lumière par rapport à au moins une direction (x, y) du réseau bidimensionnel.

8. Dispositif selon l'une des revendications précédentes, dans lequel l'aménagement d'électrodes présente une pluralité d'éléments d'électrode spatialement séparés (38) qui sont disposés en rangées (62) et colonnes (66) d'un réseau bidimensionnel;
dans lequel les électrodes (38) présentent, dans une rangée (62), une dimension (x₁, x₄) différente l'une de l'autre et, dans la rangée, une dimension (x₁, x₄) univoque dans une direction de rangée (x); et/ou
dans lequel les électrodes (38) présentent, dans une colonne (66), une dimension différente l'une de l'autre et, dans la colonne (66), une dimension univoque dans une direction de colonne (y).

9. Dispositif selon la revendication 8, dans lequel un quotient de la dimension de deux électrodes (38) adjacentes quelconques dans la direction de rangée (x) présente une valeur de quotient uniforme; et/ou
dans lequel un quotient de la dimension de deux électrodes (38) quelconques dans la direction de colonne (y) présente la valeur de quotient uniforme.

10. Dispositif selon l'une des revendications précédentes, dans lequel l'interféromètre multimode (14; 14a à c) est conçu pour faire varier l'indice de réfraction (n₁, n₂) du matériau (46) de manière variable localement sur base d'une séquence de bits (46) comportant un premier nombre (n) de bits, dans lequel le moyen d'évaluation (28) est conçu pour fournir pour la clé (12) une séquence de bits avec le premier nombre (n) de bits pour la clé.

11. Dispositif selon l'une des revendications précédentes, dans lequel la clé est une première clé (12), dans lequel le dispositif est conçu pour guider, pendant un premier intervalle de temps, une première lumière à travers le trajet de lumière (16) pour obtenir la première clé et pour guider, pendant un deuxième intervalle de temps, une deuxième lumière à travers le trajet de lumière (16) pour obtenir une deuxième clé, dans lequel le moyen d'évaluation (28) est configuré pour combiner la première clé et la deuxième clé pour obtenir une clé globale.

12. Dispositif selon l'une des revendications précédentes, dans lequel l'interféromètre multimode est un premier interféromètre multimode (14₁), dans lequel le dispositif présente au moins un deuxième interféromètre multimode (14₂) qui est couplé à une sortie du trajet de lumière (16).

13. Dispositif selon l'une des revendications précédentes, dans lequel l'interféromètre multimode est un premier interféromètre multimode (14₁) qui est disposé de manière imbriquée dans un deuxième interféromètre multimode (14₂).

14. Dispositif selon l'une des revendications précédentes, dans lequel le matériau (46) est au moins l'un parmi un matériau électro-optique, un matériau magnéto-optique, un matériau thermo-optique et un matériau de contrainte optique.

15. Procédé (100) pour générer une clé (12), aux étapes suivantes consistant à:
guider (110) la lumière d'un côté d'entrée d'un trajet de lumière vers un côté de sortie du trajet de lumière sous l'influence d'un indice de réfraction variable localement d'un matériau du trajet de lumière, où le matériau présente un indice de réfraction contrôlable;
générer l'indice de réfraction (n₁, n₂) variable localement par un aménagement d'électrodes sur base de champs électriques variables localement (E) de l'aménagement d'électrodes (36; 36a à d);
fournir (120) une lumière influencée du côté de sortie;
recevoir (130) la lumière influencée du côté de sortie par un dispositif de réception (26) qui présente un réseau de photo-détecteurs;
effectuer (140) une évaluation sur base de la lumière influencée en effectuant une décision de valeur de seuil pour chacun des photo-détecteurs pour savoir si une grandeur détectée dans le photo-détecteur respectif doit être convertie en un 0 binaire ou en un 1 binaire; et
générer (150) la clé sur base de l'évaluation par juxtaposition des décisions de valeur de seuil.
